# EUROPÄISCHE PATENTSCHRIFT

(11) **EP 2 574 757 B1**
(45) Veröffentlichungstag und Bekanntmachung des Hinweises auf die Patenterteilung: **26.02.2014**
(21) Anmeldenummer: 11401602.5
(22) Anmeldetag: 30.09.2011
(51) Int. Cl.: F02C 6/16

(54) **Verfahren zum Betrieb eines adiabatischen Druckluftspeicherkraftwerks und adiabatisches Druckluftspeicherkraftwerk**
Method for operationg an adiabatic compressed air storage power plant and adiabatic compressed air storage power plant
Procédé de fonctionnement d'une centrale d'accumulation d'air comprimé adiabatique et centrale d'accumulation d'air comprimé adiabatique

(43) Veröffentlichungstag der Anmeldung: 03.04.2013
(73) Patentinhaber: Ed. Züblin AG, 70563 Stuttgart (DE)
(72) Erfinder: Mayer, Peter-Michael, Dr., 70192 Stuttgart (DE); Niklasch, Christoph, Dr., 71139 Ehningen (DE)

(56) Entgegenhaltungen:
- EP-A1- 2 241 737
- WO-A1-2011/066039
- US-A1- 2006 137 349
- US-A1- 2011 094 236

## Beschreibung

### Technisches Gebiet

Die Erfindung betrifft ein Verfahren zum Betrieb eines adiabatischen Druckluftspeicherkraftwerks gemäß dem Oberbegriff des Anspruchs 1 sowie ein adiabatisches Druckluftspeicherkraftwerk zur Durchführung eines solchen Verfahrens gemäß dem Oberbegriff des Anspruchs 5.

### Stand der Technik

Beispielsweise um wetterabhängige regenerative Energiequellen, wie etwa Windkraft und/oder Solarenenergie, zur Spitzenlast- und/oder Mittellast- und/oder Grundlast-Stromversorgung vorzusehen, werden Speicherkraftwerke benötigt, welche die Energie von während günstiger Wetterbedingungen gegenüber dem Stromverbrauch zuviel produzierten Stroms zum Ausgleich während ungünstiger Wetterbedingungen gegenüber dem Stromverbrauch zuwenig produzierten Stroms speichern können. Dabei kann auch längerfristig vorgesehen sein Energiemengen vorzuhalten, die beispielsweise Nachfrageunterschiede zwischen Sommer und Winter ausgleichen können.

Allgemein werden Speicherkraftwerke benötigt, um die Energie von während Zeiten geringen Stromverbrauchs zuviel produzierten Stroms zumindest so lange zwischenzuspeichern, bis der Stromverbrauch den momentan erzeugten Strom zu übersteigen droht.

Ein Druckluftspeicherkraftwerk ist ein Beispiel für ein solches Speicherkraftwerk.

Im Unterschied zu einem für den gleichen Einsatzzweck entwickelten Pumpspeicherkraftwerk, bei dem zu Schwachlastzeiten in einen hoch gelegenen Speichersee gepumptes Wasser über Fallrohre nach unten fließt und dabei mittels einer oder mehrerer Turbinen einen oder mehrere Generatoren antreibt, nutzt ein Druckluftspeicherkraftwerk die Energie, die in verdichteter bzw. komprimierter Luft steckt. In Schwachlastzeiten wird hierbei mit einem elektrisch angetriebenen Verdichter Luft verdichtet und in einem Druckluftspeicher gespeichert, beispielsweise in einer unterirdischen Kaverne oder Mine. In Zeiten z.B. hoher Stromnachfrage, wie etwa bei Spitzenlast, wird die Druckluft aus dem Druckluftspeicher entnommen und in einer Turbine entspannt, die ihre Leistung an einen gekoppelten Generator abgibt.

Dabei stellt ein Druckluftspeicherkraftwerk kein Kraftwerk im herkömmlichen Sinne dar, da bei der Verdichtung der Luft mehr Energie aufgewandt werden muss, als bei deren Entspannung wieder entnommen werden kann. Ein Druckluftspeicherkraftwerk ist demnach vielmehr ein Energiespeicher mit einem oder mehreren Druckluftspeichern und angeschlossener Turbine und Generator zur Bereitstellung elektrischen Stroms zu Zeiten der Spitzenlast.

Bekannte Probleme von Druckluftspeicherkraftwerken sind deren eingeschränkter Gesamtwirkungsgrad bedingt einerseits durch hohe Verluste aufgrund beabsichtigter und unbeabsichtigter Wärmeabgabe bei der Erzeugung und Speicherung der Druckluft sowie andererseits durch gegebenenfalls vorgesehene, der Gefahr einer Vereisung der Turbine bei der Entspannung der Druckluft entgegenwirkender konventioneller Maßnahmen. Die Gründe hierfür sind folgende:
- Die Verdichtung bzw. Kompression der Luft führt zu einer Erhöhung von deren Temperatur. Näherungsweise kann hierbei von einer adiabatischen Zustandsänderung ausgegangen werden, bei der die vom Verdichter an der Luft verrichtete Arbeit direkt die innere Energie der Luft und damit deren Temperatur erhöht. Hierbei können je nach thermodynamischem Ausgangszustand der Luft, Verdichterleistung und Gesamtdruckverhältnis aller Stufen des Verdichters Temperaturen von weit über 1000°C erreicht werden. Um die Komponenten der Anlage vor diesen Temperaturen zu schützen ist bekannt, die Temperatur der verdichteten Luft über beispielsweise kühlmitteldurchströmte Wärmetauscher an die Umgebung abzugeben.
- Abhängig von der Dauer des Verbleibs der verdichteten Luft bis zu deren Wiederentnahme im Druckluftspeicher findet eine Abgabe eines Teils der Wärme über die Wandungen des Druckluftspeichers an die Umgebung statt. Ist der Druckluftspeicher beispielsweise eine Kaverne oder eine Mine wird die Wärme an das umgebende Mineral bzw. Gestein abgegeben.
- Die Luft kühlt bei der Expansion in der Turbine stark ab. Hierdurch kann in der Luft enthaltene Restfeuchtigkeit gefrieren und die Turbine vereisen. Um dies zu verhindern muss die Luft vor oder während der Entspannung erwärmt werden, beispielsweise durch konventionelles Zuheizen mittels eines Brennstoffs, wie etwa Erdgas. Hierbei wird der Brennstoff der Luft bei deren Entnahme aus dem Druckluftspeicher beigemengt. Das Brennstoff-Luft-Gemisch wird anschließend vor dem Eintritt in eine Gasturbine entzündet, welche den Generator antreibt.

Zur Verbesserung des Gesamtwirkungsgrads von Druckluftspeicherkraftwerken ist bekannt, die Restwärme der der Gasturbine entweichenden Abgase mittels eines Rekuperators der aus dem Druckluftspeicher entnommenen Luft noch vor deren Eintritt in die Gasturbine zuzuführen. Hierdurch wird zumindest der Brennwert des Brennstoff-Luft-Gemischs besser ausgeschöpft.

Darüber hinaus sind so genannte adiabatische Druckluftspeicherkraftwerke bekannt, bei denen zumindest zum Teil die bei der Verdichtung der Luft erzeugte Wärme unter Abkühlung der verdichteten Luft bei deren Zufuhr zum Druckluftspeicher einem Wärmespeicher zugeführt wird und der Wärmespeicher bei der Entnahme der Druckluft aus dem Druckluftspeicher wieder entladen wird, indem die in dem Wärmespeicher gespeicherte Wärme der unter Entspannung durch die Turbine strömenden Luft wieder zugeführt wird. Bei der Entnahme aus dem Druckluftspeicher durchströmt die komprimierte Luft hierbei den Wärmespeicher, erhitzt sich und gelangt erst dann in die Turbine. Dadurch wird weniger oder idealerweise gar kein Brennstoff zur Erwärmung der Luft benötigt. Während der Expansion in der Turbine kühlt die Luft auf Umgebungstemperatur ab. Ein adiabatisches Druckluftspeicherkraftwerks umfasst somit wenigstens zwei Energiespeicher, mindestens einen ersten bestehend aus einem oder mehreren Druckluftspeichern zur Zwischenspeicherung potentieller Energie, sowie mindestens einen zweiten bestehend aus mindestens einem Wärmespeicher zur Zwischenspeicherung von Wärme. Ein adiabatisches Druckluftspeicherkraftwerk erreicht so im Vergleich zu einem zuvor beschriebenen Druckluftspeicherkraftwerk mit Gasturbine einen höheren Wirkungsgrad. Entgegen ihrer Bezeichnung führen adiabatische Druckluftspeicherkraftwerke jedoch keine adiabatischen Zustandsänderungen aus, sie kommen durch die Rückführung der bei der Verdichtung erzeugten Wärme an die aus dem Druckluftspeicher entnommene Luft dem Wirkungsgrad adiabatischer Zustandsänderungen lediglich näher.

Damit ein Wärmespeicher seine Wärmespeicherfunktion erfüllen kann, weist dieser vorzugsweise in einem beispielsweise durch einen Behälterinnenraum gebildeten Wärmespeicherraum beherbergte Wärmespeichermittel auf. Die Wärmespeichermittel sind in der Lage, einem Arbeitsfluid Wärme zu entnehmen, die Wärme über einen bestimmten Zeitraum hinweg zu speichern und anschließend beispielsweise dem selben Arbeitsfluid wieder zuzuführen. Dabei wird den Wärmespeichermitteln zunächst vermittels des Arbeitsfluids Wärme zugeführt, welche anschließend von den Wärmespeichermitteln möglichst verlustarm gespeichert wird, um zumindest einen Teil der gespeicherten Wärme den Wärmespeichermitteln bei Bedarf vermittels des Arbeitsfluids wieder zu entziehen.

Bei dem Arbeitsfluid kann es sich direkt um die dem Druckluftspeicher zuzuführende und diesem wieder zu entnehmende Druckluft handeln. Anstelle von Luft kommt hierbei grundsätzlich jedes unter Betriebsbedingungen eines Druckluftspeicherkraftwerks gasförmige, kompressible Medium in Frage. Bei dem Arbeitsfluid kann es sich auch um ein Wärmeübertragungsmittel handeln, dass in einem eigenen Kreislauf zirkuliert, der zumindest einen zwischen Verdichter und Druckluftspeicher bzw. Druckluftspeicher und Turbine angeordneten Wärmetauscher umfasst, welcher primärseitig von der Druckluft durchströmt ist.

Handelt es sich bei dem Arbeitsfluid um die dem Druckluftspeicher zuzuführende und diesem wieder zu entnehmende Druckluft, kann der Wärmespeicher einen auch als Containment bezeichneten Druckbehälter umfassen, beispielsweise indem er Teil eines als Wärmespeicher ausgeführten Druckbehälters ist, welcher den Wärmespeicherraum mit den darin beherbergten Wärmespeichermitteln umgibt, so dass die Wärmespeichermittel zumindest während des Auf- und Entladens des Druckspeichers von der Druckluft durchströmt werden können und dabei unmittelbar mit der Druckluft in Kontakt kommen.

Durch EP 1 857 614 A2 ist ein als ein Wärmespeicher für ein adiabatisches Druckluftspeicherkraftwerk ausgeführter und für diesen Zweck Wärmespeichermittel beherbergender Druckbehälter bekannt. Dieser Wärmespeicher weist einen durch einen von dem Druckbehälter umschlossenen Behälterinnenraum gebildeten Wärmespeicherraum auf, in welchem die Wärmespeichermittel untergebracht sind. Zur Zufuhr und zur Entnahme von Wärme kann der Wärmespeicherraum von einem durch einer Kaverne von einem Verdichter oder einer Turbine von der Kaverne zuzuführende Druckluft gebildeten Arbeitsfluid durchströmt werden. Der Druckbehälter dieses Wärmespeichers weist einen vorgespannten Betonmantel aus hochfestem Beton mit Stahlkappe auf. Die Vorspannung erfolgt horizontal und vertikal bevorzugt durch Spannglieder aus Kohlefasern. Eine hitzebeständige Schicht und eine erste thermisch isolierende Schicht trennen die Wärmespeichermittel vom temperaturempfindlicheren Beton. Zwischen der ersten thermisch isolierenden Schicht und dem Betonmantel bzw. der Stahlkappe kann sich darüber hinaus noch eine zweite thermisch isolierende Schicht befinden, falls die erste thermisch isolierende Schicht nicht selbst in ausreichendem Maße thermisch isolierend wirkt. Bei der zweiten thermisch isolierenden Schicht kann es sich um eine Luftschicht handeln. Zur Kühlung der Innenseite des Betonmantels kann darüber hinaus in dem Betonmantel auch noch ein Kühlmittelkreislauf vorgesehen sein. Bei dem verwendeten Kühlmittel handelt es sich bevorzugt um Wasser. Die Wärmespeichermittel bestehen aus Formsteinen aus einem keramischen Material. Die Formsteine weisen Durchführungen in Form von Strömungskanalabschnitten für die unter Druck stehende Luft auf. Die Wärmespeichermittel haben wegen der Änderung deren Volumens bei Temperaturwechseln keinen direkten Kontakt zu dem den Behälterinnenraum umgebenden Betonmantel und auch nicht zu den die Wärmespeichermittel vom temperaturempfindlicheren Beton trennenden hitzebeständigen und thermisch isolierenden Schichten. Damit die ständigen Temperaturzyklen nicht zu einer Verschiebung der Formsteine und deren Strömungskanalabschnitte relativ zueinander führen, können die Formsteine mit Nut und Feder versehen sein, mit denen sie ineinander greifen.

Nachteilig an dem Druckbehälter dieses Wärmespeichers ist eine latente Verschlechterung des Wirkungsgrads eines hiermit ausgestatteten Druckluftspeicherkraftwerks durch unkontrolliertes Entweichen von Druckluft in die Umgebung, weil der Betonmantel nicht gasdicht ist. Dieser Nachteil tritt unabhängig davon auf, ob der Druckbehälter als Wärmespeicher oder Teil eines Wärmespeichers ausgeführt ist, oder beispielsweise als Druckluftspeicher und/oder zur Beherbergung einer oder mehrerer mit der Druckluft kommunizierender und/oder umgehender technischer Einrichtungen des Druckluftspeicherkraftwerks ausgebildet ist.

Ein zusätzlicher Nachteil des bekannten Wärmespeichers liegt in einer unzureichenden Kühlung des wärmeempfindlichen Betonmantels. Hierdurch muss dieser unter hohem Kostenaufwand entsprechend überdimensioniert werden, um einem Versagen entgegenzuwirken.

Ein weiterer Nachteil ergibt sich durch die vermittels des Kühlmittelkreislaufs ungenützt aus dem Wärmespeicher abgeführte Wärme.

Druckluftspeicherkraftwerke weisen außerdem unabhängig davon, ob es sich um konventionelle oder um adiabatische Druckluftspeicherkraftwerke handelt, den Nachteil auf, dass die insbesondere für die Turbinen vorgesehenen Werkstoffe aufgrund ihrer Auslegung zum Ertragen hoher mechanischer Belastungen unter sehr hohen auftretenden Temperaturen den in einer Behebung kurzfristiger Versorgungsengpässe im Stromnetz liegenden eigentlichen Zweck von Druckluftspeicherkraftwerken zu vereiteln drohen, da insbesondere die Turbinen entweder nur sehr langsam angefahren werden können, bis sie Betriebstemperatur erreicht haben, oder vor Inbetriebnahme zuerst auf eine Mindesttemperatur vorgeheizt werden müssen, unter welcher die insbesondere für die Turbinen verwendeten Werkstoffe die auftretenden mechanischen Belastungen zerstörungsfrei ertragen. Ähnlich verhält es sich mit den Werkstoffen für gegebenenfalls getrennt vorgesehene Verdichter. Auch hier kann zur Vorbeugung von Schäden eine Vorwärmung erforderlich sein, bevor ein Druckluftspeicherkraftwerk angefahren werden kann, um gegenüber dem Stromverbrauch zuviel produzierten Strom aus dem Stromnetz abzuschöpfen. Damit trifft der geschilderte Nachteil sowohl für Turbinen, als auch für Verdichter und damit allgemein für Turbomaschinen von Druckluftspeicherkraftwerken zu.

Ein hiermit einhergehender Nachteil ist eine nicht zufrieden stellende kurzfristige Verfügbarkeit von Druckluftspeicherkraftwerken.

Durch WO 2011/066039 A1 ist ein adiabatisches Druckluftspeicherkraftwerk bekannt. Dieses weist einen Wärmespeicher mit einem Betonmantel auf. In dem Wärmespeicher ist ein weiterer Wärmespeicher, ebenfalls von einem Betonmantel umgeben, angeordnet. Die sich zwischen und in den Betonmänteln ergebenden Wärmespeicherräume sind mit einer Schüttung befüllt. Die Betonmäntel sind vorgespannt. Die Wärmespeicherräume haben unterschiedliches Druckniveau. Wärmeverluste des inneren Wärmespeicherraums sind verringert, wegen dessen geringen Temperaturunterschieds zum umgebenden Wärmespeicherraum.

Durch US 2011/0094236 A1 ist ein Kraftwerk bekannt, bei dem zunächst Druckluft vermittels eines ersten Verdichters Luft aus der Umgebung verdichtet, anschließend nochmals mittels eines zweiten Verdichters verdichtet und dann einer Brennkammer zugeführt wird, bevor das Abgas in einer mehrstufigen Turbine entspannt wird, deren Niederdruckturbine einen Generator, deren Mitteldruckturbine den zweiten Verdichter und deren Hochdruckturbine über eine Kupplung den ersten Verdichter antreibt. Parallel zum durch ein Ventil absperrbaren Strömungsweg zwischen dem ersten und dem zweiten Verdichter ist ein durch Ventile vollständig oder teilweise absperbarer alternativer Strömungsweg vorgesehen, dessen Nutzung während Zeiten eines Stromüberschusses und eines Strommangels im Versorgungsnetzwerk vorgesehen ist. Während eines Stromüberschusses treiben ein Elektromotor den ersten Verdichter und ein Elektromotor einen in dem zuschaltbaren Strömungsweg zwischen erstem Verdichter und zweitem Verdichter angeordneten dritten Verdichter an. Die vermittels des dritten Verdichters verdichtete Druckluft wird einem Druckspeicher zugeführt. Zuvor durchströmt die Druckluft einen zwischen dem dritten Verdichter und dem Druckspeicher angeordneten, Wärmespeichermittel beherbergenden Wärmespeicher. In den parallelen Strömungswegen sind optionale Zwischen- und Nachkühler vorgesehen. Während eines Strommangels wird der Druckspeicher entladen, wobei die Druckluft zunächst den Wärmespeicher durchströmt, dann den zweiten Verdichter und anschließend die Brennkammer und die Turbinenstufen. Restwärme des Entspannungsprozesses nach der Niederdruckturbine kann der dem Druckspeicher entnommenen Druckluft vor und nach der Wärmeaufnahme aus dem Wärmespeicher über eine mit Wärmetauschern versehene Leitung zugeführt werden. Eine alternative Ausführung sieht eine Entspannung der im Druckspeicher gespeicherten Druckluft nach deren Erwärmung durch Durchströmen des Wärmespeichers in einer weiteren, einen Generator antreibenden Turbine, sowie in der einen weiteren Generator antreibenden Niederdruckturbine vor.

Durch US 2006/0137349 A1 ist ein Geothermiekraftwerk mit einem Druckluftspeicher bekannt. Dieses kann einen solarthermische Kollektor umfassen, dessen Wärme im Sommer vermittels eines Wärmetauschers in der als Wärmespeicher dienenden Sole gespeichert wird.

Durch EP 2 241 737 A1 ist ein thermoelektrisches Speicherkraftwerk bekannt, bei dem überschüssige elektrische Energie in Wärme umgewandelt und gespeichert wird und bei Bedarf die Wärme vermittels thermoelektrischer Wandler wieder in Elektrizität umgewandelt wird.

### Aufgabe der Erfindung

Der Erfindung liegt die Aufgabe zugrunde, ein Verfahren zum Betrieb eines adiabatischen Druckluftspeicherkraftwerks zu entwickeln, welches ausgehend vom Stand der Technik den Wirkungsgrad sowie die kurzfristige Verfügbarkeit eines Druckluftspeicherkraftwerks verbessert und welches darüber hinaus mit einfachen Mitteln kostengünstig verwirklicht werden kann, sowie ein zur Durchführung eines solchen Verfahrens geeignetes adiabatisches Druckluftspeicherkraftwerk zur Verfügung zu stellen.

### Darstellung der Erfindung

Die Aufgabe wird jeweils gelöst mit den Merkmalen der unabhängigen Ansprüche.

Ein erster Gegenstand der Erfindung betrifft demnach ein Verfahren zum Betrieb eines
- mindestens eine Turbomaschine zum Verdichten und/oder Entspannen von Druckluft unter Verbrauch bzw. Erzeugung mechanischer Energie,
- zumindest einen zeitweilig mit mindestens einer Turbomaschine während des Verdichtens von Druckluft mechanisch gekoppelten Antriebsmotor zur Erzeugung mechanischer Energie,
- mindestens einen zeitweilig mit mindestens einer Turbomaschine während des Entspannens von Druckluft mechanisch gekoppelten Generator zur Umwandlung mechanischer Energie in Elektrizität,
- mindestens einen zumindest zeitweilig mit mindestens einer Turbomaschine kommunizierenden Druckspeicher zur Zwischenspeicherung verdichteter Druckluft, sowie
- mindestens einen zumindest zeitweilig mit mindestens einer Turbomaschine und dem Druckspeicher kommunizierenden Wärmespeicher zur Entnahme und Speicherung von während des Verdichtens der Druckluft entstehender Wärme und deren Wiederabgabe während des Entspannens der Druckluft, mit einem von einem einen bevorzugt vorgespannten Betonmantel aufweisenden Druckbehälter umgebenen, Wärmespeichermittel beherbergenden Wärmespeicherraum,
umfassenden adiabatischen Druckluftspeicherkraftwerks.

Das Verfahren sieht:
- eine gasdichte Abdichtung des Wärmespeicherraums gegenüber dem Betonmantel des den Wärmespeicherraum umgebenden Druckbehälters vorzugsweise durch Anordnung eines sich vorzugsweise gegen die dem Wärmespeicherraum zugewandten Innenseite des Betonmantels abstützenden gasdichten Abdichtungsmittels, beispielsweise zumindest eines Inliners, zwischen den im Wärmespeicherraum beherbergten Wärmespeichermitteln und dem Betonmantel des diesen umgebenden Druckbehälters des Wärmespeichers,
- eine Kühlung des Betonmantels durch Abfuhr von dem Wärmespeicherraum entweichender, ansonsten einen schädlichen Wärmeeintrag in den Betonmantel verursachender Wärme zwischen dem gasdicht abgedichteten Wärmespeicherraum und dem Betonmantel noch vor dem Auftreffen der Wärme auf die dem Wärmespeicherraum zugewandte Innenseite des Betonmantels, vorzugsweise durch Anordnung mindestens einer beispielsweise eine Wärme aufnehmende Partie eines Kühlmittelkreislaufs umfassenden Kühlvorrichtung
- zwischen zumindest einem Teil des gasdichten Abdichtungsmittels und dem Betonmantel, sowie
- eine Weiterverwendung der zur Kühlung des Betonmantels abgeführten, beispielsweise von der Kühlvorrichtung aufgenommenen Wärme
vor.

Die Weiterverwendung umfasst:
- eine Zufuhr der abgeführten Wärme in einen die Wärme speichernden und während des Entspannens der Druckluft wieder an diese abgebenden Wärmespeicher, beispielsweise in Form einer Wärmerückgewinnung und/oder Rückführung der abgeführten Wärme in den selben, gekühlten Wärmespeicher, und/oder in Form einer Einbringung der abgeführten Wärme in einen anderen, von dem gekühlten Wärmespeicher verschiedenen Wärmespeicher, beispielsweise einen Wärmespeicher niedereren Temperaturniveaus, beispielsweise mit oder ohne Zwischenschaltung einer Wärmepumpe, um die Wärme auf ein erforderliches oder gewünschtes Temperaturniveau zu heben, und/oder
- eine Vorwärmung zumindest einer Turbomaschine des Druckluftspeicherkraftwerks unter Verwendung der abgeführten und beispielsweise vom Kühlmittelkreislauf im Wärmespeicher aufgenommenen Wärme beispielsweise vermittels wenigstens eines Wärmetauschers und/oder
- eine Elektrizitätserzeugung mittels der abgeführten Wärme, beispielsweise durch Zufuhr zu einer Wärmekraftmaschine, wie etwa einem Stirlingmotor oder einer Turbomaschine oder einem thermoelektrischen Wandler.

Ein zweiter Gegenstand der Erfindung betrifft ein adiabatisches Druckluftspeicherkraftwerk umfassend:
- mindestens eine Turbomaschine zum Verdichten und/oder Entspannen von Druckluft unter Verbrauch bzw. Erzeugung mechanischer Energie,
- zumindest einen zeitweilig mit mindestens einer Turbomaschine während des Verdichtens von Druckluft mechanisch gekoppelten Antriebsmotor zur Erzeugung zur Verdichtung benötigter mechanischer Energie,
- mindestens einen zeitweilig mit mindestens einer Turbomaschine während des Entspannens von Druckluft mechanisch gekoppelten Generator zur Umwandlung beim Entspannen entstehender mechanischer Energie in Elektrizität,
- mindestens einen zumindest zeitweilig mit mindestens einer Turbomaschine kommunizierenden Druckspeicher zur Zwischenspeicherung verdichteter Druckluft, sowie
- mindestens einen zumindest zeitweilig mit mindestens einer Turbomaschine und dem Druckspeicher kommunizierenden Wärmespeicher zur Entnahme und Speicherung von während des Verdichtens der Druckluft entstehender Wärme und deren Wiederabgabe während des Entspannens der Druckluft, mit einem von einem einen bevorzugt vorgespannten Betonmantel aufweisenden Druckbehälter umgebenen, Wärmespeichermittel beherbergenden Wärmespeicherraum.

Der Wärmespeicher des adiabatischen Druckluftspeicherkraftwerks umfasst ein zwischen den im Wärmespeicherraum beherbergten Wärmespeichermitteln und dem Betonmantel des diesen umgebenden Druckbehälters des Wärmespeichers angeordnetes, sich vorzugsweise zumindest zum Teil gegen die dem Wärmespeicherraum zugewandten Innenseite des Betonmantels abstützendes gasdichtes Abdichtungsmittel, vorzugsweise umfassend einen Inliner aus einem gasdichten Material, wie beispielsweise aus Stahl und/oder Kunststoff und/oder einem Verbundwerkstoff, zur gasdichten Abdichtung des Wärmespeicherraums gegenüber dem Betonmantel des den Wärmespeicherraum umgebenden Druckbehälters. Das gasdichte Abdichtungsmittel kann alternativ oder zusätzlich aus mehreren vorzugsweise redundanten Schichten und/oder Lagen bestehen, beispielsweise um die Betriebssicherheit des Wärmespeichers zu erhöhen. So ist beispielsweise denkbar, den erwähnten Inliner mehrschichtig aufzubauen und/oder mit einer beispielsweise auf der dem vom Betonmantel umschlossenen und dem Wärmespeicherraum umfassenden Behälterinnenraum zugewandten Innenseite des Betonmantels aufgebrachten, vom Inliner unabhängigen Beschichtung zu ergänzen. Darüber hinaus kann auf der dem Wärmespeicherraum zugewandten Innenseite des Inliners ein Wärmeisolationsmittel vorgesehen sein, das zum Wärmespeicherraum hin einen gasdichten Abschluss beispielsweise in Form einer ein- oder mehrlagigen, hitzebeständigen Folie aufweist, die ebenfalls Teile der Funktion des gasdichten Abdichtungsmittels zumindest mit übernimmt und dadurch einen Teil des gasdichten Abdichtungsmittels bilden kann.

Indem sich das beispielsweise zumindest zum Teil als Inliner ausgeführte gasdichte Abdichtungsmittel auf der Innenseite des Betonmantels abstützt, ist dieses damit gegenüber im vom Betonmantel umschlossenen Wärmespeicherraum zumindest während des Be- und Entladens des Druckspeichers herrschendem Überdruck druckfest und kann aus beliebigen, gasdichten Werkstoffen, wie beispielsweise Stahl und/oder Kunststoff und/oder Faserverbundwerkstoffen kostengünstig hergestellt werden.

Darüber hinaus umfasst der Wärmespeicher des adiabatischen Druckluftspeicherkraftwerks eine zwischen wenigstens einem Teil des gasdichten Abdichtungsmittels und dem Betonmantel angeordnete, bevorzugt zumindest einen Teil der Abstützung wenigstens eines Teils des gasdichten Abdichtungsmittels gegen die dem Wärmespeicherraum zugewandten Innenseite des Betonmantels mit besorgende, Wärme abführende Kühlvorrichtung, wie etwa eine Wärme aufnehmende Partie eines Kühlmittelkreislaufs, zur Kühlung des Betonmantels durch Abfuhr von dem Wärmespeicherraum entweichender, einen schädlichen Wärmeeintrag in den Betonmantel verursachender Wärme zwischen dem gasdicht abgedichteten Wärmespeicherraum und dem Betonmantel noch vor deren Auftreffen auf die dem Wärmespeicherraum zugewandte Innenseite des Betonmantels.

Zwischen dem von dem gasdichten Abdichtungsmittel umschlossenen Wärmespeicherraum und dem Betonmantel ist demnach eine Kühlvorrichtung, beispielsweise eine Wärme aufnehmende Partie eines Kühlmittelkreislaufs, angeordnet. Hierdurch wird ein schädlicher Wärmeeintrag in den Betonmantel verhindert. Das gasdichte Abdichtungsmittel kann sich zumindest teilweise über die Kühlvorrichtung am Betonmantel abstützen.

Zwischen wenigstens einem Teil des gasdichten Abdichtungsmittels und dem Betonmantel können ein oder mehrere Wärmeisolationsmittel, beispielsweise eine hitzebeständige Schicht und eine erste thermisch isolierende Schicht angeordnet sein, welche die gasdichten Abdichtungsmittel vom temperaturempfindlicheren Beton und/oder die Wärmespeichermittel vom gasdichten Abdichtungsmittel trennen. Zwischen der ersten thermisch isolierenden Schicht und dem Betonmantel kann sich darüber hinaus noch eine zweite thermisch isolierende Schicht befinden, falls die erste thermisch isolierende Schicht nicht selbst in ausreichendem Maße thermisch isolierend wirkt. Bei der zweiten thermisch isolierenden Schicht kann es sich um eine Luftschicht handeln. Die Kühlvorrichtung ist vom Wärmespeicherraum aus gesehen bevorzugt zwischen der letzten thermisch isolierenden Schicht und dem Betonmantel oder innerhalb der letzten thermisch isolierenden Schicht vor dem Betonmantel angeordnet.

Zusammengefasst kann der Aufbau des Wärmespeichers von innen nach außen gesehen beispielsweise zunächst wenigstens einen Teil, beispielsweise eine Lage des den Wärmespeicherraum umschließenden gasdichten Abdichtungsmittels, gefolgt von einem oder mehreren Wärmeisolationsmitteln, der Kühlvorrichtung, einem oder mehreren weiteren Wärmeisolationsmitteln sowie gegebenenfalls eines weiteren Teils des gasdichten Abdichtungsmittels gefolgt vom Betonmantel vorsehen. Grundsätzlich ist auch denkbar, dass von innen nach außen gesehen zunächst Wärmeisolationsmittel, darauf hin das gasdichte Abdichtungsmittel gefolgt von der Kühlvorrichtung und anschließend der Betonmantel angeordnet sind. Auch kann zuinnerst zunächst mindestens ein erstes Wärmeisolationsmittel, beispielsweise mindestens eine hitzebeständige Schicht, gefolgt von wenigstens einem zweiten Wärmeisolationsmittel, beispielsweise mindestens einer ersten thermisch isolierenden Schicht zwischen den im Wärmespeicherraum beherbergten Wärmespeichermitteln und dem gasdichten Abdichtungsmittel angeordnet sein. Zwischen gasdichtem Abdichtungsmittel und dem Betonmantel ist dann die Kühlvorrichtung vorgesehen, über die sich das gasdichte Abdichtungsmittel zumindest zum Teil an der Innenseite des Betonmantels abstützen kann. Die jeweils genannten Komponenten können wechselseitige Funktionen übernehmen. Die Aufzählung der Folge der verschiedenen Komponenten ist darüber hinaus nur beispielhaft und stellt keine abschließende Aufzählung von möglichen Kombinationen dar.

Vorzugsweise trennen ein oder mehrere Wärmeisolationsmittel in Form mindestens einer hitzebeständigen Schicht und wenigstens einer thermisch isolierenden Schicht die Wärmespeichermittel vom gasdichten Abdichtungsmittel und vom temperaturempfindlicheren Betonmantel.

Zwischen einer ersten thermisch isolierenden Schicht und dem Betonmantel kann sich darüber hinaus noch ein Wärmeisolationsmittel in Form einer zweiten thermisch isolierenden Schicht zwischen Wärmespeichermitteln und gasdichtem Abdichtungsmittel oder zwischen gasdichtem Abdichtungsmittel und Betonmantel befinden. Das gasdichte Abdichtungsmittel kann auch mehrere Schichten bzw. Lagen aufweisen, die beispielsweise ein Wärmeisolationsmittel einschließen. Bei der zweiten thermisch isolierenden Schicht kann es sich um eine Luftschicht handeln.

Beispielsweise kann wenigstens ein Teil des gasdichten Abdichtungsmittels, beispielsweise eine Schicht oder Lage des gasdichten Abdichtungsmittels, vorzugsweise zwischen einer Hochtemperaturisolierung und dem Betonmantel untergebracht sein.

Die Kühlvorrichtung umfasst bevorzugt mindestens eine Wärme aufnehmende Partie wenigstens eines Kühlmittelkreislaufs. Die Wärme aufnehmende Partie eines Kühlmittelkreislaufs kann beispielsweise mindestens eine das gasdichte Abdichtungsmittel umschlingende Rohrwendel umfassen. Alternativ oder zusätzlich kann eine Wärme aufnehmende Partie eines Kühlmittelkreislaufs in das gasdichte Abdichtungsmittel integriert sein. Eine solche Ausführung ist insbesondere bei einem gasdichtungsmittel in Form eines Inliners aus Metall vorteilhaft, wo Kühlrohre bzw. eine oder mehrere Kühlwendel durch beispielsweise an den dem Wärmespeicherraum zugewandten Seiten der Kühlrohre bzw. Kühlwendel angeordnete Platten miteinander verbunden sind, oder Platten zwischen den Kühlrohren bzw. Kühlwendeln vorgesehene Zwischenräume gasdicht überbrücken. Auch eine Ausführung des gasdichten Abdichtungsmittels in Form eines Hohlzylinders aus Metall, der auf seiner dem Wärmespeicherraum abgewandten Außenseite wärmeleitend mit Kühlrohren und/oder Kühlwendeln versehen ist, ist denkbar. Im Falle einer in das gasdichte Abdichtungsmittel integrierten Kühlvorrichtung ist eine gegebenenfalls vorgesehene Wärmeisolierung bestehend beispielsweise aus einer oder mehreren zuvor genannten Schichten zumindest teilweise auf der dem Wärmespeicherraum zugewandten Innenseite des gasdichten Abdichtungsmittels vorgesehen.

Das adiabatische Druckluftspeicherkraftwerk verfügt außerdem über Mittel zur Weiterverwendung der zur Kühlung des Betonmantels abgeführten, von der Kühlvorrichtung bzw. von dem Kühlmittelkreislauf aufgenommenen Wärme.

Diese Mittel zur Weiterverwendung der von der Kühlvorrichtung aufgenommenen bzw. zwischen dem gasdicht abgedichteten Wärmespeicherraum und dem Betonmantel zu dessen Kühlung abgeführten Wärme können mindestens einen primärseitig mit der Kühlvorrichtung und sekundärseitig mit mindestens einer Turbomaschine wärmetechnisch verbundenen Wärmetauscher umfassen. Die wärmetechnische Verbindung kann durch Wärmeleitung und/oder Wärmeübergang mit oder ohne erzwungene Umwälzung bzw. Konvektion hergestellt sein. Der Wärmetauscher kann dabei eine Wärme abgebende Partie eines Kühlmittelkreislaufs bilden. Beispielsweise können Heatpipes zur Herstellung wärmetechnischer Verbindungen vorgesehen sein.

Bei der Turbomaschine kann es sich um eine zum Verdichten und/oder Entspannen von dem Druckspeicher des adiabatischen Druckluftspeicherkraftwerks zuzuführender bzw. entnommener Druckluft handeln. Grundsätzlich ist auch denkbar, die abgeführte Wärme einer hiervon verschiedenen Turbomaschine zuzuführen, welche einen beispielsweise für regelungs- und/oder überwachungstechnische Aufgaben im Druckluftspeicherkraftwerk benötigte Elektrizität erzeugenden Generator antreibt.

Alternativ oder zusätzlich können die Mittel zur Weiterverwendung wenigstens eine Wärmepumpe umfassen, um die zur Kühlung des Betonmantels abgeführte, von der Kühlvorrichtung bzw. von dem Kühlmittelkreislauf aufgenommene Wärme auf ein zur Weiterverwendung geeignetes, beispielsweise erforderliches oder gewünschtes Temperaturniveau zu heben.

Zudem können die Mittel zur Weiterverwendung zumindest einen die von der Kühlvorrichtung aufgenommene Wärme speichernden und während des Entspannens der Druckluft wieder an diese abgebenden Wärmespeicher umfassen. Dabei kann es sich um den selben Wärmespeicher handeln, aus dem die Kühlvorrichtung die Wärme aufgenommen hat, oder um einen hiervon verschiedenen Wärmespeicher gleichen oder unterschiedlichen Temperaturniveaus.

Denkbar ist auch, dass die Mittel zur Weiterverwendung der von der Kühlvorrichtung aufgenommenen Wärme eine Wärmekraftmaschine umfassen, welche beispielsweise zur Elektrizitäts- bzw. Stromerzeugung unter Verwendung der von der Kühlvorrichtung aufgenommenen Wärme vorgesehen sein kann. Beispielsweise kann es sich bei der Wärmekraftmaschine um einen Stirlingmotor oder wie bereits erwähnt um eine Turbomaschine handeln.

Die Mittel zur Weiterverwendung der von der Kühlvorrichtung aufgenommenen Wärme können alternativ oder zusätzlich einen oder mehrere thermoelektrische Wandler umfassen. Diese nutzen beispielsweise den Seebeck-Effekt, um Elektrizität zu erzeugen. Der eine Turbomaschine zum Verdichten von Druckluft antreibende Antriebsmotor und der von einer Turbomaschine zum Entspannen von Druckluft angetriebene Generator können durch ein und die selbe elektrische Maschine verwirklicht sein.

Die Kühlvorrichtung kann redundant ausgeführt sein, beispielsweise indem mehrere Wärme aufnehmende Partien mehrerer verschiedener Kühlmittelkreisläufe zwischen dem gasdichten Abdichtungsmittel und dem Betonmantel angeordnet sind.

Für den Wärmespeicher des Druckluftspeicherkraftwerks mit seinen im Wärmespeicherraum beherbergten Wärmespeichermitteln ist demnach ein auch als Containment bezeichneter Druckbehälter mit mindestens einem von einem vorzugsweise vorgespannten Betonmantel zumindest teilweise umschlossenen, den Wärmespeicherraum umfassenden Behälterinnenraum zur wenigstens zeitweiligen Aufnahme zumindest eines mindestens zeitweilig unter Druck stehenden, bevorzugt gasförmigen Fluids, insbesondere von Druckluft vorgesehen. Der Druckbehälter ist mit mindestens einem wenigstens gasdichten Abdichtungsmittel versehen, welches eine schleichende Entweichung gasförmigen Fluids durch den Betonmantel hindurch unterbindet.

Vorzugsweise stützt sich das gasdichte Abdichtungsmittel zumindest zum Teil über den Betonmantel gegen aus dem unter Druck gegenüber der Umgebung stehenden Fluid resultierende Kräfte ab.

Das gasdichte Abdichtungsmittel kann mindestens eine Schicht, beispielsweise in Form eines Inliners umfassen.

Der Betonmantel kann wenigstens eine zwischen einem Behälterkopf und einem Behälterfuß vorgesehene hohlzylinderförmige Behälterpartie umfassen. Der Behälterinnenraum ist dabei vom Behälterkopf, dem Behälterfuß und der wenigstens einen hohlzylinderförmigen Behälterpartie umschlossen. Der Betonmantel kann darüber hinaus zumindest teilweise den Behälterkopf und/oder den Behälterfuß umfassen.

Unter dem Begriff hohlzylinderförmig werden hierbei bestimmte Formen geometrischer Körper zusammengefasst:
- sie weisen einen Mantel auf, der ein Volumen einschließt,
- sie weisen eine Zylinderachse auf, die aus den Mittelpunkten benachbart aufeinander folgender paralleler Querschnittsebenen gebildet ist,
- diese Zylinderachse kann gerade oder gekrümmt verlaufen,
- die Querschnittsgeometrien können entlang der Zylinderachse gleichmäßig oder veränderlich sein.
- Beispiele für derartige geometrische Körper sind sowohl gerade oder schiefe allgemeine Zylinder, Kegel, Kegelstumpfe, Kugeln, Kugelabschnitte, eiförmige Objekte, Ellipsoide und Prismen im Speziellen, als auch Rotationskörper im Allgemeinen. Darüber hinaus sind auch Rotationskörper um gekrümmt verlaufende Kurven eingeschlossen.
- Der Begriff der Zylinderachse schließt dabei gerade oder gekrümmt verlaufende Kurven mit ein, welche durch die Mittelpunkte paralleler Querschnittsebenen durch die geometrische Form gebildet werden.

Die Zylinderachse der hohlzylinderförmigen Behälterpartie erstreckt sich dabei vom Behälterkopf entlang der Achse des Druckbehälters bis zum Behälterfuß. Bevorzugt ist zumindest die hohlzylinderförmige Behälterpartie des Betonmantels vorzugsweise zumindest in Umfangsrichtung schlaff bewehrt.

Alternativ oder zusätzlich kann zumindest die hohlzylinderförmige Behälterpartie des Betonmantels horizontal und/oder vertikal vorgespannt bewehrt sein. Die Vorspannung kann beispielsweise durch Spannglieder aus Kohlefasern und/oder aus Metall, beispielsweise Stahl oder Eisen erfolgen. Die Spannglieder können beispielsweise in Leerrohren bzw. -hülsen geführt zumindest im hohlzylinderförmigen Teil innerhalb des Betonmantels verlaufen.

Eine alternative oder zusätzliche Ausgestaltungsmöglichkeit ergibt sich durch eine außen liegende Vorspannung. Hierzu kann die hohlzylinderförmige Behälterpartie in einem normal zur Zylinderachse verlaufenden Querschnitt mindestens drei gleichmäßig über den Umfang verteilt radial von der Zylinderachse weg nach außen auf dem Umfang des Betonmantels aufstehende Fortsätze aufweisen. Besonders bevorzugt handelt es sich hierbei um eine gerade Anzahl von Fortsätzen. Die Fortsätze sind zumindest derart weit bzw. lang auf dem Umfang des Betonmantels aufstehend ausgebildet, dass zumindest vom freien Ende jeden Fortsatzes aus zumindest die freien Enden der beiden in Umfangsrichtung unmittelbar benachbarten Fortsätze in gerader Linie über die beispielsweise konvex gewölbte Mantelfläche des Betonmantels hinweg sichtbar sind. Zwischen in Umfangsrichtung mittelbar oder unmittelbar benachbarten Fortsätzen sind lineare Spannglieder gespannt, welche die hohlzylinderförmige Behälterpartie unter eine in Umfangsrichtung und gegen einen Überdruck im Behälterinnenraum gegenüber der Umgebung wirkende und radial von außen zur Zylinderachse hin gerichtete Vorspannung setzen. Sich hierdurch ergebende Vorteile sind, dass hierfür lineare Spannglieder verwendet werden können, welche keine Reibungsverluste aufgrund einer vollständigen oder teilweisen Umschlingung des Betonmantels aufweisen. Darüber hinaus sind die linearen Spannglieder durch deren Anordnung außerhalb der hohlzylinderförmigen Behälterpartie zwischen den auf der äußeren Mantelfläche des Betonmantels aufstehenden Fortsätzen leicht zugänglich und können bei Bedarf nachgespannt und/oder ausgewechselt werden. Darüber hinaus wird hierdurch eine einfache und zuverlässige Inspektion der Spannglieder durch Inaugenscheinnahme ermöglicht.

Auch eine vollständige und/oder teilweise Umschlingung ist denkbar, wobei aufgrund der zunehmenden Reibungsverluste mit zunehmender Umschlingung eine teilweise Umschlingung gegenüber einer vollständigen Umschlingung aufgrund der zuvor genannten Gründe bevorzugt wird.

Die Fortsätze sind bevorzugt stempelförmig außen auf dem Betonmantel aufstehend ausgebildet. In einem Querschnitt normal zur Zylinderachse betrachtet können sich die Fortsätze vom Betonmantel aus gesehen zu ihren freien Enden hin verjüngen.

Besonders bevorzugt sind zumindest zwischen denjenigen benachbarten Fortsätzen Druckbogen bzw. Druckgewölbe vorgesehen, zwischen denen lineare Spannglieder gespannt sind. Durch die Druckbogen bzw. -gewölbe treten druckbehälterseitig zwischen den Fortsätzen nur Druckkräfte auf. Im vorzugsweise integral mit den Fortsätzen ausgestalteten Betonmantel treten so an keiner Stelle unbeherrschbare Zugkräfte auf. Die Fortsätze entsprechen hierbei den festen Auflagern einer Bogen- bzw. Gewölbebrücke. Den Abtrag der in Richtung der Sehne des Druckbogens bzw. des Druckgewölbes wirkenden, die Fortsätze auseinander treibenden Schubkräfte besorgen die zwischen den Fortsätzen gespannten linearen Spannelemente.

Wenigstens ein Teil des gasdichten Abdichtungsmittels, beispielsweise eine Schicht des gasdichten Abdichtungsmittels, kann in den Behälterinnenraum eingebracht sein und/oder kann Teil des den Behälterinnenraums umgebenden Betonmantels sein.

Wenigstens ein Teil des gasdichten Abdichtungsmittels, beispielsweise eine Schicht des gasdichten Abdichtungsmittels, kann ein im Behälterinnenraum untergebrachtes und den Wärmespeicherraum umschließendes Behältnis, beispielsweise ein Gefäß aus einem z.B. biegesteifen, gasdichten Material oder einen Ballon aus einem biegeschlaffen, gasdichten Material umfassen.

Besonders bevorzugt handelt es sich bei dem Behältnis um einen Inliner. Unter dem Begriff Inliner ist hierbei ein z.B. biegeschlaffes oder biegesteifes, bevorzugt diffusionsdichtes Behältnis beispielsweise aus einem gasdichten Material zu verstehen, welches im vom Betonmantel des Druckbehälters zumindest teilweise umschlossenen Behälterinnenraum untergebracht ist, um einen Verlust des unter Druck stehenden Fluids zumindest durch den Betonmantel hindurch zu unterbinden. Der Inliner selbst kann nur begrenzt druckstabil ausgeführt sein, wobei insbesondere der Betonmantel den Innendruck des mindestens zeitweilig unter Druck stehenden, bevorzugt gasförmigen Fluids aufnimmt.

Das mindestens eine gasdichte Material wenigstens eines Teils des gasdichten Abdichtungsmittels, beispielsweise einer Schicht des gasdichten Absichtungsmittels, kann ein- oder mehrlagig sein. Beispielsweise kann das gasdichte Material aus einer oder mehreren Lagen gleichen und/oder unterschiedlichen Werkstoffs bestehen. Der Werkstoff kann homogen oder inhomogen sein und/oder faserverstärkt sein bzw. einen Faserverbundwerkstoff umfassen.

Das ein- oder mehrlagige gasdichte Material kann außerdem wenigstens einen metallischen Werkstoff und/oder einen Kunststoff umfassen. Alternativ oder zusätzlich können verstärkte, z.B. faserverstärkte Werkstoffe vorgesehen sein.

Das ein- oder mehrlagige gasdichte Material kann darüber hinaus eine eine ein- oder mehrlagige Folie aus Lagen gleichen und/oder unterschiedlichen Werkstoffs umfassen. Alternativ oder zusätzlich kann wenigstens ein Teil des gasdichten Abdichtungsmittels, beispielsweise eine Schicht des gasdichten Abdichtungsmittels, eine ein- oder mehrlagige Beschichtung der Innenwand des Behälterinnenraums aus einem gasdichten Material umfassen.

Wenigstens eine Lage der Beschichtung kann flüssig oder pastös aufbringbar und unter Betriebsbedingungen des als Wärmespeicher ausgeführten Druckbehälters festen Aggregatzustand aufweisen.

Wenigstens ein Teil des gasdichten Abdichtungsmittels, beispielsweise eine Schicht des gasdichten Abdichtungsmittels, kann mit dem Betonmantel, vorzugsweise der dem Behälterinnenraum zugewandten Innenseite des Betonmantels, verbunden sein.

Alternativ oder zusätzlich kann wenigstens ein Teil des gasdichten Abdichtungsmittels, beispielsweise eine Schicht des gasdichten Abdichtungsmittels, mit einer im Behälterinnenraum beherbergten hitzebeständigen Schicht und/oder einer im Behälterinnenraum beherbergten thermisch isolierenden Schicht verbunden sein, eine solche umfassen oder von einer solchen umfasst werden.

Der Druckbehälter des Wärmespeichers kann beispielsweise am Behälterfuß und/oder am Behälterkopf mit wenigstens einer ersten mit einem Verdichter und/oder einer Turbine des adiabatischen Druckluftspeicherkraftwerks in Verbindung stehenden oder in Verbindung bringbaren Zu- und/oder Abführungsleitung versehen bzw. verbunden sein. Darüber hinaus kann der Druckbehälter beispielsweise am Behälterfuß und/oder am Behälterkopf mit wenigstens einer zweiten mit einem Druckluftspeicher in Verbindung stehenden oder in Verbindung bringbaren Zu- und/oder Abführungsleitung versehen sein. Der Druckbehälter kann stehend oder liegend ganz oder zum Teil im Erdboden versenkt angeordnet sein.

Die im Behälterinnenraum beherbergten Wärmespeichermittel des einen solchen Druckbehälter umfassenden Wärmespeichers können beispielsweise als Wärmetauscher ausgestaltet sein, wobei die Wärmespeichermittel zur Entnahme und Widerabgabe von Wärme aus bzw. an ein im Behälterinnenraum des Druckbehälters enthaltenes und/oder diesen durchströmendes Fluid ausgebildet sind. Die Wärmespeichermittel können hierzu beispielsweise von Kanälen durchzogen sein, durch welche das Fluid unter kleinstmöglichem Druckverlust und unter größtmöglichem Wärmeaustausch mit den Wärmespeichermitteln hindurch strömen kann.

Der einen Druckbehälter umfassende Wärmespeicherist in der Lage, beispielsweise einen hohen Massenstrom und/oder eine hohe Gesamtmasse eines prozesstechnisch benötigten Fluids durchzusetzen. Bei einem Druckluftspeicherkraftwerk handelt es sich bei dem prozesstechnisch benötigten Fluid beispielsweise um verdichtete bzw. komprimierte Druckluft. Darüber hinaus ist der Druckbehälter des Wärmespeichers imstande, einen hohen Druck des Fluids von beispielsweise bis mindestens 50 bar zu ertragen. In Verbindung mit im Inneren des Druckbehälters beherbergten Wärmespeichermitteln kann der Druckbehälter bei hohem Massenstrom und/oder hoher Gesamtmasse des unter hohem Druck von z.B. bis mindestens 50 bar stehenden Fluids Wärme bis zu hohen Temperaturen von z.B. bis mindestens 500°C von beispielsweise in einen Druckluftspeicher gepumpter Druckluft aufnehmen und auch wieder an die aus dem beispielsweise unterirdischen Druckluftspeicher entnommene Druckluft wieder abgeben bzw. rückübertragen. Durch das zumindest gasdichte Abdichtungsmittel ist der Druckbehälter in der Lage, ein latentes Entweichen gasförmigen Fluids, insbesondere Druckluft, zu verhindern. Hierdurch wird im Vergleich zum Stand der Technik eine Steigerung des Gesamtwirkungsgrads eines mit einem solchen Wärmespeicher umfassenden adiabatischen Druckluftspeicherkraftwerks erhalten.

Wichtig ist hervorzuheben, dass ein derart ausgeführter Druckbehälter auch ohne in seinem Behälterinnenraum untergebrachte Wärmespeichermittel Verwendung beispielsweise in einem Druckluftspeicherkraftwerk finden kann, beispielsweise als Druckluftspeicher und/oder zur Beherbergung einer oder mehrerer mit der Druckluft oder einem anderen unter Druck stehenden Fluid kommunizierender und/oder umgehender technischer Einrichtungen des Druckluftspeicherkraftwerks oder einer anderen technischen Einrichtung. Ein solcher Druckbehälter kann dazu dienen, zumindest eine mit einem unter Druck stehenden, prozesstechnisch benötigten, beispielsweise gasförmigen Fluid kommunizierende und/oder umgehende technische Einrichtung zur Energieerzeugung und/oder zur Energiespeicherung der Anlage zu beherbergen.

Vorteile gegenüber dem Stand der Technik ergeben sich hieraus unter anderem dadurch, dass durch das zumindest gasdichte Abdichtungsmittel ein unkontrolliertes Entweichen von Luft in die Umgebung zuverlässig und kostengünstig verhindert wird. Hierdurch kann einer latenten Verschlechterung des Wirkungsgrads eines adiabatischen Druckluftspeicherkraftwerks entgegengewirkt werden.

Zwischen der dem den Wärmespeicherraum umfassenden Behälterinnenraum zugewandten Innenseite des Betonmantels und dem Wärmespeicherraum, beispielsweise eines den Wärmespeicherraum begrenzenden Teils des gasdichten Abdichtungsmittels, ist eine Kühlung vermittels einer Kühlvorrichtung vorgesehen. Die Kühlvorrichtung kann einen Kühlmittelkreislauf umfassen. Bei dem in dem gegebenenfalls vorgesehenen Kühlmittelkreislauf verwendeten Kühlmittel handelt es sich bevorzugt um Wasser.

Die Kühlung verhindert einen schädlichen, die Stabilität des Betonmantels beeinträchtigenden Wärmeeintrag in den Betonmantel. Dadurch behält dieser im Betrieb des Wärmespeichers vollständig seine Stabilität im Gegensatz zum Stand der Technik, bei dem eine Kühlung erst im Betonmantel vorgesehen ist, nachdem ein schädlicher Wärmeeintrag bereits statt gefunden hat.

Weitere sich hieraus ergebende Vorteile gegenüber dem Stand der Technik sind, dass der zur Beherbergung von Wärmespeichermitteln in seinem Behälterinnenraum geeignete und dadurch als Wärmespeicher für ein adiabatisches Druckluftspeicherkraftwerk ausführbare Druckbehälter aus bautechnisch zugelassenen Mitteln kostengünstig hergestellt werden kann.

Bei diesen bautechnisch zugelassenen Mitteln handelt es sich vor allem um einen vorzugsweise vorgespannten Betonmantel, welcher dank der Kühlung vor schädlichem Wärmeeintrag geschützt ist und zur Vermeidung einer schleichenden Wirkungsgradverschlechterung durch entweichende Druckluft mit einem beispielsweise eine gasdichte Beschichtung seiner dem Behälterinnenraum zugewandten Innenwand umfassenden gasdichten Abdichtungsmittel versehen ist.

Indem sich das gasdichte Abdichtungsmittel zumindest zum Teil am Betonmantel abstützt, kann das gasdichte Abdichtungsmittel darüber hinaus kostengünstig hergestellt werden.

Eine kostengünstige Herstellbarkeit des Druckbehälters resultiert unter anderem durch eine erhebliche Einsparung von Kosten durch die Verwendung eines Betonmantels zur Aufnahme der durch ein zumindest zeitweise im Behälterinnenraum beherbergtes unter Druck stehendes Fluid verursachten Spannungen und Kräfte im Vergleich beispielsweise zu einem Stahldruckbehälter. Insbesondere können durch den Betonmantel wesentlich größere Abmessungen verwirklicht werden. Durch die gasdichte Abdichtung steht der im Vergleich kostengünstiger herstellbare, mit einem Betonmantel ausgeführte Druckbehälter beispielsweise einem Stahldruckbehälter hinsichtlich Verhinderung einer Entweichung insbesondere gasförmiger Fluide nunmehr in nichts mehr nach.

Vorteile gegenüber dem Stand der Technik ergeben sich unter anderem durch eine Behebung des Nachteils mangelnder technischer Umsetzbarkeit des Standes der Technik, bei dem der Druckbehälter des Wärmespeichers nicht gasdicht ist und es deshalb zu einer schleichenden Entweichung von Druckluft aus dem Wärmespeicherraum durch den diesen umgebenden Betonmantel hindurch in die Umgebung kommt. Vermittels des gasdichten Abdichtungsmittels wird demgegenüber ein unkontrolliertes Entweichen von Druckluft in die Umgebung verhindert, weil hierdurch der vom Betonmantel umgebene Wärmespeicherraum zusätzlich gasabgedichtet wird. Ein derart gegenüber dem Stand der Technik verbesserter Druckbehälter kann als Wärmespeicher oder Teil eines Wärmespeichers ausgeführt sein, oder beispielsweise als Druckluftspeicher und/oder zur Beherbergung einer oder mehrerer mit der Druckluft kommunizierender und/oder umgehender technischer Einrichtungen des Druckluftspeicherkraftwerks ausgebildet sein.

Ein mit der Behebung des beschriebenen Nachteils einhergehender Vorteil gegenüber dem Stand der Technik ist ein nachhaltig erhöhter Wirkungsgrad eines mit einem derart ausgerüsteten Wärmespeicher ausgestatteten adiabatischen Druckluftspeicherkraftwerks.

Ein zusätzlicher Vorteil gegenüber dem Stand der Technik liegt in der Weiterverwendung der zum Schutz des Betonmantels vor schädlichem Wärmeeintrag abgeführten Wärme. Hierdurch geht diese nicht ungenützt verloren, wodurch einerseits der Wirkungsgrad des Druckluftspeicherkraftwerks gesteigert werden kann, und andererseits durch eine Vorwärmung wenigstens einer Turbomaschine die Verfügbarkeit des Druckluftspeicherkraftwerks verbessert werden kann. Eine verbesserte Verfügbarkeit wird vor allem durch eine kürzere, unmittelbare Reaktionszeit zum Anlaufen des Druckluftspeicherkraftwerks sowohl während Versorgungsengpässen, wenn der Stromverbrauch den momentan erzeugten Strom übersteigt, als auch bei Stromüberschuss während Zeiten geringen Stromverbrauchs zuviel produzierten Stroms erreicht.

Wichtig ist hervorzuheben, dass der Begriff Druckluft hierbei keine Einschränkung auf komprimierte Luft darstellt, sondern stellvertretend für unter Druck stehende, zumindest innerhalb des im Betrieb eines adiabatischen Druckluftspeicherkraftwerks auftretenden Temperaturbereichs gasförmige Fluide ist.

### Kurzbeschreibung der Zeichnungen

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber können nur Bezugszeichen in den einzelnen Zeichnungen dargestellt sein, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: einen ersten Druckbehälter eines Wärmespeichers in einer Draufsicht.
- Fig. 2: einen Schnitt entlang der Linie A-A durch den Druckbehälter aus Fig. 1.
- Fig. 3: einen Schnitt entlang der Linie B-B durch den Druckbehälter aus Fig. 2.
- Fig. 4: ein Ausführungsbeispiel eines Außenquerschnitts eines Betonmantels mit kreisrundem Innenquerschnitt normal zur Zylinderachse.
- Fig. 5: einen zweiten Druckbehälter eines Wärmespeichers in einem Längsschnitt ähnlich der Darstellung in Fig. 2.
- Fig. 6: ein adiabatisches Druckluftspeicherkraftwerk.

### Ausführliche Beschreibung der bevorzugten Ausführungsbeispiele

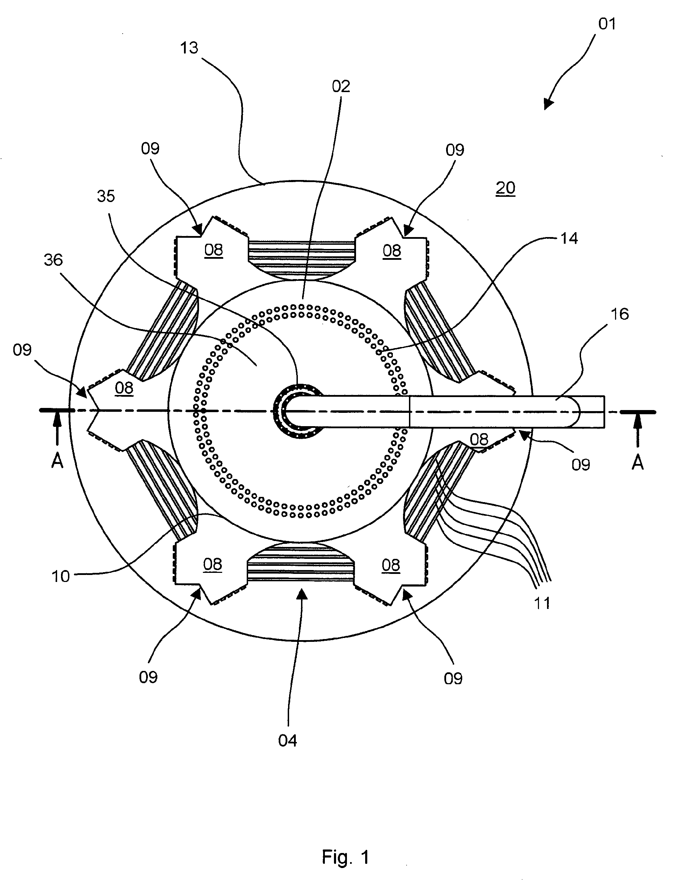

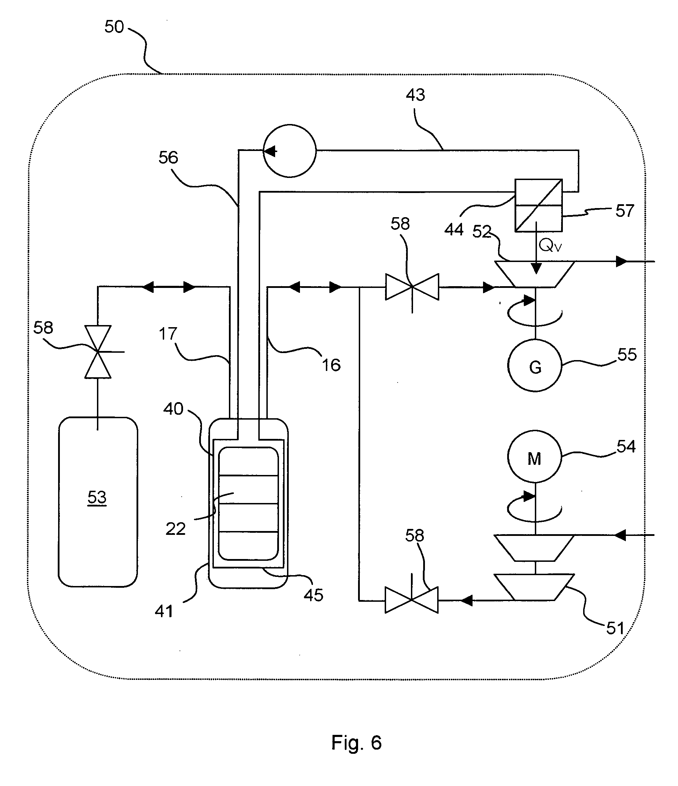

Ein Druckbehälter 01 eines in den Fig. 1 bis Fig. 5 ganz oder in Teilen bzw. verschiedenen Ansichten dargestellten Wärmespeichers 41 eines in Fig. 6 dargestellten adiabatischen Druckluftspeicherkraftwerks 50 weist einen von einem Betonmantel 07 zumindest teilweise umschlossenen Behälterinnenraum 05 auf. Der Behälterinnenraum 05 dient wenigstens zur Aufnahme eines zumindest zeitweilig unter Druck stehenden Fluids. Bei dem Fluid kann es sich um ein Stoffgemisch oder um einen reinen Stoff handeln.

Das Fluid liegt wenigstens zeitweilig gasförmig vor. Vorzugsweise handelt es sich bei dem Fluid um ein Gas, bevorzugt um ein Gasgemisch, besonders bevorzugt um Luft bzw. um Druckluft.

Der Betonmantel 07 umfasst wenigstens eine zwischen einem Behälterkopf 02 und einem Behälterfuß 03 vorgesehene hohlzylinderförmige Behälterpartie 04. Der Behälterinnenraum 05 ist vom Behälterkopf 02, dem Behälterfuß 03 und der wenigstens einen hohlzylinderförmigen Behälterpartie 04 umschlossen. Der Betonmantel 07 kann darüber hinaus zusätzlich zu der hohlzylinderförmigen Behälterpartie 04 zumindest Teile des Behälterkopfs 02 und/oder Behälterfußes 03 umfassen.

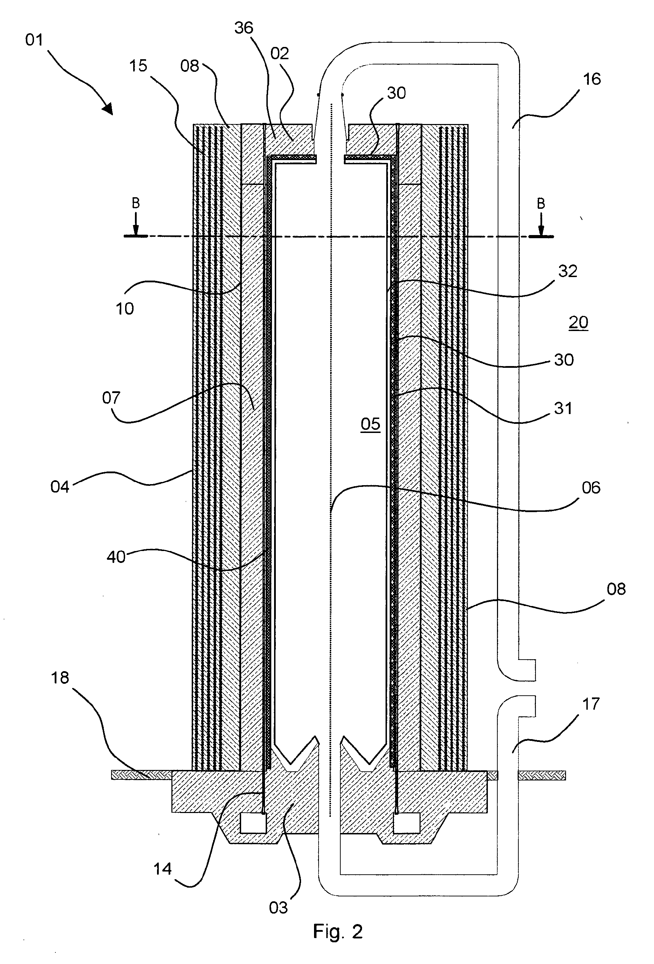

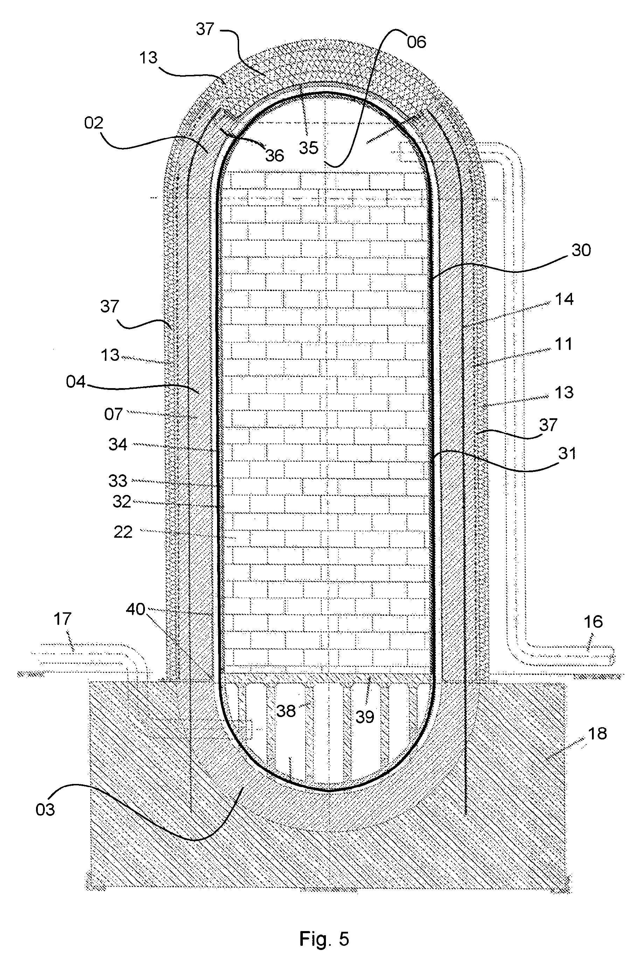

Die hohlzylinderförmige Behälterpartie 04 kann eine Zylinderachse 06 aufweisen, welche sich entlang der Achse des Druckbehälters 01 vom Behälterkopf 02 bis zum Behälterfuß 03 erstreckt. Der Behälterkopf 02 kann beispielsweise einen Behälterdeckel und der Behälterfuß 03 einen Behälterboden bilden. Es ist sowohl eine stehende, als auch eine liegende Anordnung des Druckbehälters 01 denkbar. Bei einer stehenden Anordnung dient der Behälterfuß 03 wie in Fig. 2 und Fig. 5 dargestellt bevorzugt einer Aufstellung des Druckbehälters 01 beispielsweise auf dem Erdboden 18 bzw. einer zumindest zum Teil beispielsweise in den Erdboden 18 eingelassenen Aufstellung des Druckbehälters 01.

Der Behälterinnenraum 05 des Druckbehälters 01 ist mit mindestens einem wenigstens gasdichten Abdichtungsmittel 30 versehen.

Das gasdichte Abdichtungsmittel 30 stützt sich zumindest teilweise über den Betonmantel 07 gegen aus dem unter Druck stehenden Fluid resultierende Kräfte ab.

Das gasdichte Abdichtungsmittel 30 umfasst mindestens eine Schicht. Dabei können mehrere voneinander getrennt angeordnete Schichten vorgesehen sein, welche jeweils aus einer oder mehreren Lagen mindestens eines gasdichten Materials hergestellt sein können.

Das mindestens eine gasdichte Material wenigstens einer Schicht des gasdichten Abdichtungsmittels 30 kann:
- aus einer oder mehreren Lagen gleichen und/oder unterschiedlichen Werkstoffs bestehen, und/oder
- aus einem homogenen oder inhomogenen und/oder faserverstärkten Werkstoff bestehen oder ein solches umfassen, und/oder
- wenigstens einen metallischen Werkstoff und/oder einen Kunststoff umfassen, und/oder
- mindestens eine ein- oder mehrlagige Folie aus Lagen gleichen und/oder unterschiedlichen Werkstoffs umfassen.

Wenigstens ein Teil des gasdichten Abdichtungsmittels 30, beispielsweise eine Schicht des gasdichten Abdichtungsmittels 30, kann ein im Behälterinnenraum 05 untergebrachtes Behältnis, beispielsweise ein Gefäß aus einem z.B. biegesteifen, gasdichten Material oder einen Ballon aus einem biegeschlaffen, gasdichten Material, wie etwa einen Inliner 31 umfassen.

Zur Verwendung des Druckbehälters 01 als einen Wärmespeicher 41 eines in Fig. 6 dargestellten adiabatischen Druckluftspeicherkraftwerks 50 umschließt das beispielsweise ein Behältnis in Form eines Inliners 31 umfassende gasdichte Abdichtungsmittel 30 einen in Fig. 5 beispielhaft dargestellte Wärmespeichermittel 22 beherbergenden Wärmespeicherraum 42. Der Wärmespeicherraum 42 ist demnach derjenige Teil des Behälterinnenraums 05, der vom gasdichten Abdichtungsmittel 30 umschlossen ist.

Der Teil eines Wärmespeichers 41 bildende Druckbehälter 01 kann wie in Fig. 2 und Fig. 5 dargestellt beispielsweise am Behälterkopf 02 mit einer ersten Zu- und/oder Abführungsleitung 16 versehen sein. Beispielsweise am Behälterfuß 03 kann der Druckbehälter 01 beispielsweise mit wenigstens einer zweiten Zu- und/oder Abführungsleitung 17 versehen sein.

Die erste Zu- und/oder Abführungsleitung 16 steht in diesem Fall bevorzugt wie in Fig. 6 dargestellt während des Aufladens mit einer Turbomaschine 51 zum Verdichten von Druckluft und während des Entladens mit einer Turbomaschine 52 zum Entspannen von Druckluft in Verbindung bzw. ist wahlweise mit einer der genannten Turbomaschinen 51, 52 in Verbindung bringbar. Wichtig ist hierbei hervorzuheben, dass die genannten Turbomaschinen 51, 52 ein oder mehrstufig ausgeführt sein können und/oder eine einzige Turbomaschine 51, 52 für beide genannten Zwecke vorgesehen sein kann. Die zweite Zu- und/oder Abführungsleitung 17 steht hierbei bevorzugt mit einem beispielsweise unterhalb des Erdbodens 18 angeordneten Druckluftspeicher 53 in Verbindung bzw. ist wahlweise mit einem Druckluftspeicher 53 in Verbindung bringbar.

Beispielsweise der Behälterkopf 02 kann insbesondere bei einer Ausgestaltung des Druckbehälters 01 als ein Wärmespeicher 41 bevorzugt abnehmbar sein, wodurch der Behälterinnenraum 05 für Montage, Beschickung und Wartung leicht zugänglich ist. Vorzugsweise befindet sich bei einem aufrecht stehenden Druckbehälter 01 mindestens der Behälterkopf 02 oberhalb des Erdbodens 18, der Rest kann im Erdboden 18 versenkt sein. Alternativ ist denkbar, lediglich eine beispielsweise mittels einer Stahlkappe 35 verschlossene Zugangsöffnung im Behälterkopf 02 vorzusehen.

Um unter Anderem der Belastung durch die aus dem unter Druck stehenden Fluid resultierenden Kräfte zu widerstehen, kann der Betonmantel 07 wenigstens teilweise in mindestens einer Richtung schlaff bewehrt sein. Hierzu können Bewehrungen 15 vorgesehen sein, welche in Umfangsrichtung und/oder in Richtung entlang der Zylinderachse 06 und/oder in einer anderen Richtung, beispielsweise spiralförmig um die Zylinderachse 06 herum im Betonmantel 07 verlaufen können.

Alternativ oder zusätzlich kann der Betonmantel 07 wenigstens teilweise in mindestens einer Richtung vorgespannt sein. Hierzu können getrennte Spannglieder 11 in Umfangsrichtung und/oder Spannglieder 14 in Richtung entlang der Zylinderachse 06 vorgesehen sein.

Die in Umfangsrichtung wirkenden Spannglieder 11 können die Zylinderachse 06 zumindest teilweise umschlingen, wobei die Spannglieder 11 gekrümmt verlaufen. Eine solche Ausgestaltung ist bei dem in Fig. 5 dargestellten Druckbehälter 01 vorgesehen. Wesentlich vorteilhafter ist jedoch eine in den Fig. 1 bis Fig. 4 dargestellte Ausgestaltung mit in Umfangsrichtung wirkenden linear verlaufenden bzw. linearen Spanngliedern 11. Da diese im Gegensatz zur in Fig. 5 dargestellten Ausgestaltung nicht gekrümmt verlaufen, sondern linear verlaufend ausgebildet sind, weisen diese keine Reibungsverluste durch eine auch nur teilweise Umschlingung auf, wodurch es auch zu keinen Verschleißerscheinungen beispielsweise durch eine thermische und/oder mechanische Wechselbeanspruchung des Druckbehälters 01 kommt. Darüber hinaus ist durch außen liegende lineare Spannglieder 11 ein gleichmäßiger Verlauf der Vorspannung sichergestellt.

Zur Verwirklichung einer Vorspannung in Umfangrichtung mittels linearer Spannglieder 11 können diese wie in den Fig. 1 bis Fig. 4 dargestellt außerhalb des Betonmantels 07 angeordnet sein. Hierzu können zumindest auf dem als hohlzylinderförmige Behälterpartie 04 ausgebildeten Teil des Betonmantels 07 von der Zylinderachse 06 aus gesehen auf der dem Behälterinnenraum 05 abgewandten Außenseite des Betonmantels radial nach außen aufstehende Fortsätze 08 vorgesehen sein, zwischen denen die linearen Spannglieder 11 gespannt sind.

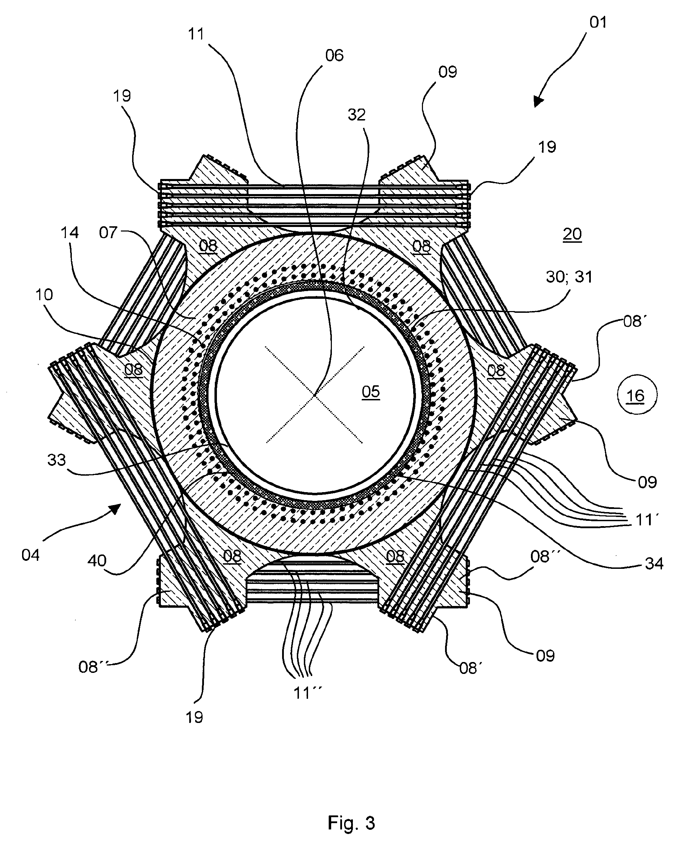

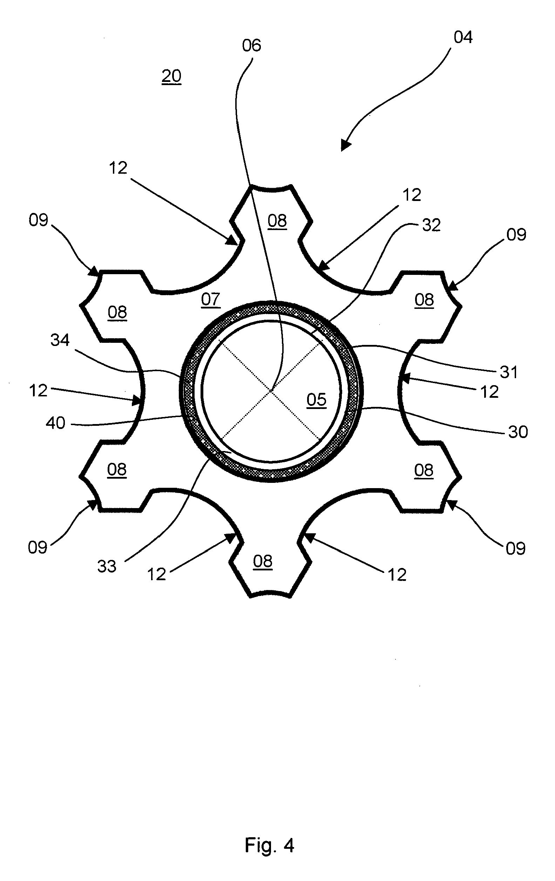

Die auf der hohlzylinderförmigen Behälterpartie 04 des Betonmantels 07 radial von der Zylinderachse 06 weg nach außen aufstehende Fortsätze 08 sind hierbei in einem in den Fig. 3 und Fig. 4 dargestellten, normal zur Zylinderachse 06 verlaufenden Querschnitt und in der in Fig. 1 dargestellten Draufsicht vorzugsweise gleichmäßig über den Umfang des Betonmantels 07 verteilt angeordnet. In dem in Fig. 3 dargestellten Querschnitt erstrecken sich die Fortsätze 08 ununterbrochen vom Behälterfuß 03 zum Behälterkopf 02.

Die Fortsätze 08 sind zumindest derart weit aufstehend ausgebildet, dass zumindest vom freien Ende 09 jeden Fortsatzes 08 aus zumindest die freien Enden 09 der beiden in Umfangsrichtung unmittelbar benachbarten Fortsätze 08 in gerader Linie über die konvexe Wölbung der Mantelfläche 10 des Betonmantels 07 hinweg sichtbar sind. Hieraus ergibt sich die Notwendigkeit, dass wenigstens drei auf dem Betonmantel 07 radial nach Außen von der Zylinderachse 06 weg aufstehende Fortsätze 08 vorgesehen sind.

Zwischen in Umfangsrichtung benachbarten Fortsätzen 08 sind die linearen Spannglieder 11 angeordnet. Die linearen Spannglieder 11 halten wenigstens die hohlzylinderförmige Behälterpartie 04 des Betonmantels 07 unter einer in Umfangsrichtung und gegen einen Überdruck im Behälterinnenraum 05 wirkende radial von außen zur Zylinderachse 06 hin gerichteten Vorspannung.

Vorzugsweise ist eine gerade Anzahl n von gleichmäßig verteilt um den Umfang des Betonmantels 07 angeordneten Fortsätzen 08 vorgesehen. Besonders bevorzugt sind wie in den Fig. 1 bis 4 dargestellt insgesamt sechs gleichmäßig über den Umfang verteilt auf dem Betonmantel 07 von der Zylinderachse 06 weg radial nach außen aufstehende Fortsätze 08 vorgesehen.

Hierdurch können wie in Fig. 3 ersichtlich in einer ersten normal zur Zylinderachse 06 verlaufenden Querschnittsebene lineare Spannglieder 11' zwischen ersten Paaren aus benachbarten Fortsätzen 08' gespannt sein, wohingegen in einer unmittelbar benachbarten, zweiten normal zur Zylinderachse 06 verlaufenden Querschnittsebene lineare Spannglieder 11 " zwischen zweiten Paaren aus benachbarten Fortsätzen 08" gespannt sind. Die ersten Paare benachbarter Fortsätze 08', zwischen denen in der ersten Querschnittsebene die Spannglieder 11' gespannt sind, sind hierbei gegenüber den zweiten Paaren benachbarter Fortsätze 08", zwischen denen in der zweiten Querschnittsebene die Spannglieder 11" gespannt sind, um einen Winkel 360°/n um die Zylinderachse 06 verdreht, wobei n die Zahl der Fortsätze in einer Querschnittsebene ist.

Wichtig ist an dieser Stelle hervorzuheben, dass die Fortsätze 08 integrale Bestandteile wenigstens der hohlzylinderförmigen Behälterpartie 04 des Betonmantels 07 sein können, wobei die Fortsätze 08 hierbei in einem Herstellungsvorgang gemeinsam mit dem Betonmantel 07 und vorzugsweise mit diesem fest verbunden hergestellt werden können. Alternativ können die Fortsätze 08 stempelförmig auf dem Betonmantel 07 aufstehend ausgebildet sein. Darüber hinaus können sich die Fortsätze 08 in beiden Ausgestaltungsvarianten in einem Querschnitt normal zur Zylinderachse 06 betrachtet vom Betonmantel 07 aus gesehen zu ihren freien Enden 09 hin verjüngen. Alternativ oder zusätzlich können die Fortsätze 08 in beiden Ausgestaltungsvarianten auswuchsartig mit gleichmäßigen und knickfreien Übergängen in die äußere Gestalt zumindest der hohlzylinderförmigen Behälterpartie 04 integriert sein.

Zwischen den benachbarten Fortsätzen 08 können Druckbogen 12 vorgesehen sein (Fig. 4).

Die freien Enden 09 der Fortsätze 08 können Aufnahmesysteme 19 für die linearen Spannglieder 11 tragen. Die Aufnahmesysteme 19 können als Metallkonstruktionen beispielsweise aus Stahl ausgeführt sein. Die linearen Spannglieder 11 erstrecken sich vom einen am freien Ende 09 eines ersten Fortsatzes 08 angeordneten Aufnahmesystem 19 zum nächsten, am freien Ende 09 eines zweiten Fortsatzes 08 angeordneten Aufnahmesystem 19. Die linearen Spannglieder können hierbei in so genannten Speichen verankert sein.

Der Druckbehälter 01 kann wie in Fig. 1 und Fig. 5 angedeutet durch eine Ummantelung 13 umhüllt sein. Die Ummantelung 13 kann dem Schutz des Druckbehälters 01 gegen Umwelteinflüsse, insbesondere gegen Witterungseinflüsse und Wärmestrahlung dienen. Gleichzeitig kann die Ummantelung 13 den Druckbehälter 01, insbesondere bei einer in den Fig. 1 bis Fig. 4 dargestellten Ausführung mit außen liegenden linearen Spanngliedern 11 gegen unbefugte und/oder unberechtigte Manipulation schützen. Die Ummantelung 13 kann als luftdurchlässige Hülle ausgestaltet sein, damit es zu keinem Wärmestau unter ihr kommt.

Zumindest der Betonmantel 07 des Druckbehälters 01 kann wie in Fig. 2 und Fig. 5 dargestellt mittels Spanngliedern 14 in Richtung parallel zur Zylinderachse 06 vorgespannt sein. Die Spannglieder 14 können hierbei vom Behälterkopf 02 zum Behälterfuß 03 in eigens hierfür vorgesehenen Kanälen, Aussparungen, Rohren oder dergleichen zumindest in der hohlzylinderförmigen Behälterpartie 04 des Betonmantels 07 des Druckbehälters 01 verdeckt verlaufen.

Der Betonmantel 07 Kann wie in Fig. 2 dargestellt mittels einer zumindest in Richtung parallel zur Zylinderachse 06 verlaufenden Bewehrung 15 schlaff bewehrt sein. Alternativ oder zusätzlich kann auch eine schlaffe Bewehrung in Umfangsrichtung vorgesehen sein. Mittels einer gegebenenfalls vorgesehenen, auch als Schlaffbewehrung bezeichneten schlaff ausgeführten Bewehrungen kann die Sicherheit des Druckbehälters 01 gesteuert werden. Wichtig ist hervorzuheben, dass eine schlaffe Bewehrung in Umfangsrichtung und/oder in Richtung parallel der Zylinderachse 06 auch bei dem in Fig. 5 dargestellten Druckbehälter vorgesehen sein kann.

Wichtig ist hierbei die Trennung der Vorspannung von der für eine zusätzliche Sicherheit eventuell eingebauten schlaffen Bewehrung hervorzuheben. Die schlaffe Bewehrung kann ohne Störung und Berücksichtigung der Vorspannung im inneren Betonmantel verlegt werden, und die Vorspannung kann außen angebracht werden. Das vereinfacht die Planung und den Bau eines Druckbehälters 01 erheblich und verbessert das Tragverhalten durch weniger Fehlstellen und Hohlräume im Betonmantel 07.

Der Betonmantel 07 kann wie in den Fig. 3 und Fig. 4 dargestellt einen normal zur Zylinderachse 06 kreisrunden Innenquerschnitt aufweisen. Auch der Betonmantel des in Fig. 5 dargestellten Druckbehälters 01 kann einen kreisrunden Innenquerschnitt aufweisen.

Vorzugsweise trennt wenigstens ein Wärmeisolationsmittel in Form einer durch mindestens eine hitzebeständige Schicht 32 geschützten ersten thermisch isolierenden Schicht 33 die im vom Behälterinnenraum 05 des Druckbehälters 01 des Wärmespeichers 41 umfassten Wärmespeicherraum 42 beherbergten Wärmespeichermittel 22 vom hitzeempfindlicheren Betonmantel 07. Dabei sind besonders bevorzugt zumindest die hitzebeständige Schicht 32 und die erste thermisch isolierende Schicht 33 des mindestens einen Wärmeisolationsmittels zwischen den Wärmespeichermitteln 22 und dem den Wärmespeicherraum 42 begrenzenden gasdichten Abdichtungsmittels 30 angeordnet. Zwischen der ersten thermisch isolierenden Schicht 33 und dem Betonmantel 07 sowie gegebenenfalls dem Behälterkopf 02 und dem Behälterfuß 03 kann sich darüber hinaus noch eine zweite thermisch isolierende Schicht 34 befinden, falls die erste thermisch isolierende Schicht 33 nicht selbst in ausreichendem Maße thermisch isolierend wirkt. Die zweite thermisch isolierende Schicht 34 kann beispielsweise aus Luft bestehen bzw. Luft oder ein anderes, Wärmeleitung durch Wärmeübergang unterbindendes Medium umfassen. Beispielsweise kann die zweite thermisch isolierende Schicht 34 einen oder mehrere zumindest zum Teil evakuierte Räume bzw. Zwischenräume umfassen.

Die zweite thermisch isolierende Schicht 34 kann beispielsweise zwischen dem gasdichten Abdichtungsmittel 30 und dem Betonmantel 07 vorgesehen sein, aber auch eine Anordnung der zweiten thermisch isolierenden Schicht 34 zwischen erster thermisch isolierender Schicht 33 und dem gasdichten Abdichtungsmittel 30 ist denkbar. Auch kann ein Teil eines Wärmeisolationsmittels, beispielsweise die hitzebeständige Schicht 32 und/oder die erste thermisch isolierende Schicht 33 und/oder die zweite thermisch isolierende Schicht 34 Teil des gasdichten Abdichtungsmittels sein.

Zusammengefasst kann wenigstens ein Teil des gasdichten Abdichtungsmittels 30, beispielsweise eine oder mehrere Schichten des gasdichten Abdichtungsmittels 30:
- sich an dessen dem Behälterinnenraum 05 zugewandten Innenseite abstützen, und/oder
- in den Behälterinnenraum 05 eingebracht sein, und/oder
- eine ein- oder mehrlagige Beschichtung der dem Behälterinnenraum 05 zugewandten Innenwand des Betonmantels 07 umfassen, und/oder
- ein im Behälterinnenraum 05 untergebrachtes Behältnis umfassen, beispielsweise in Form eines Inliners 31 und/oder
- einen Teil mindestens einer hitzebeständigen Schicht 32 und/oder einer thermisch isolierenden Schicht 33, 34 bilden, eine solche umfassen oder von einer solchen umfasst werden.

Aufgrund der Wärmeausdehnung der Wärmespeichermittel 22 ist vorgesehen, dass diese keinen direkten Kontakt zur hitzebeständigen Schicht 32 aufweisen. Alternativ oder zusätzlich können Leerräume zwischen den einzelnen Elementen der Wärmespeichermittel 22 vorhanden sein, die ausdehnungskompensierend wirken.

Die Wärmespeichermittel 22 können auf einer auf Stützen 38 ruhenden Decke 39 liegen, welche bevorzugt aus Beton hergestellt sein kann.

Der beispielsweise im oberen Bereich eines stehend angeordneten Druckbehälter 01 vorgesehenen Behälterkopf 02 kann als eine Beton- oder Stahlkappe oder -kuppel 35 ausgestaltet sein. Ebenso ist denkbar, dass eine Stahlkappe oder -kuppel 35 in eine den Behälterkopf 02 bildenden Betonkappe oder -kuppel 36 integriert ist.

Zumindest der Behälterkopf 02 und/oder der Behälterfuß und/oder die hohlzylinderförmige Behälterpartie 04 des Betonmantels 07 des Druckspeichers 01 können gegen die Umgebung 20 durch wärmedämmendes Material 37 thermisch isoliert sein. Die thermische Isolation kann zumindest zum Teil durch die gegebenenfalls vorgesehene Ummantelung 13 erfolgen.

Der Behälterfuß 03 kann in Form eines am Erdboden 18 oder zumindest zum Teil darin versenkt angeordneten Fundaments ausgestaltet sein, in den die darauf aufstehende und mittels des Behälterkopfs 02 an ihrer dem Erdboden 18 abgewandten Seite verschlossene hohlzylinderförmige Behälterpartie 04 des Betonmantels 07 eingegossen sein kann.

Der Wärmespeicher 41 umfasst darüber hinaus eine zwischen wenigstens einem Teil des gasdichten Abdichtungsmittels 30 und dem Betonmantel 07 des Druckbehälters 01 angeordnete, bevorzugt zumindest einen Teil der Abstützung wenigstens eines Teils des gasdichten Abdichtungsmittels 30 gegen die dem Wärmespeicherraum 42 zugewandten Innenseite des Betonmantels 07 mit besorgende, Wärme abführende Kühlvorrichtung 40.

Die Kühlvorrichtung 40 kann beispielsweise eine Wärme aufnehmende Partie eines Kühlmittelkreislaufs umfassen. Die Kühlvorrichtung 40 schützt den Betonmantel 07 vor einem dessen Festigkeit und Alterung beeinträchtigenden, schädlichen Wärmeeintrag durch Abfuhr von dem Wärmespeicherraum 42 entweichender Wärme zwischen dem gasdicht abgedichteten Wärmespeicherraum 42 und dem Betonmantel 07 noch vor deren Auftreffen auf die dem Wärmespeicherraum 42 zugewandte Innenseite des Betonmantels 07.

Die Kühlvorrichtung 40 kann beispielsweise durch außen, auf der dem Wärmespeicherraum abgewandten Seite eines den Wärmespeicherraum umgebenden Inliners 31 des gasdichten Abdichtungsmittels 30 angeordnete Kühlrohre hergestellt sein.

Die Kühlvorrichtung 40 kann hierdurch redundant ausgeführt sein, beispielsweise indem mehrere Wärme aufnehmende Partien mehrerer verschiedener Kühlmittelkreisläufe zwischen zumindest einem Teil des gasdichten Abdichtungsmittels 30 und dem Betonmantel 07 angeordnet sind.

Das in Fig. 6 dargestellte adiabatische Druckluftspeicherkraftwerk 50 umfasst zusätzlich zu einem derart aufgebauten Wärmespeicher 41 mit einem von einem Betonmantel 07 eines Druckbehälters 01 umgebenen Behälterinnenraum 05, in dem ein Wärmespeichermittel 22 beherbergender und von einem gasdichten Abdichtungsmittel 30 umgebener Wärmespeicherraum 42 untergebracht ist, zwischen welchem und dem

Betonmantel 07 eine dem Wärmespeicherraum 42 entweichende Wärme abführende Kühlvorrichtung 40 angeordnet ist, im Wesentlichen:
- mindestens eine Turbomaschine 51 zum Verdichten von Druckluft unter Verbrauch mechanischer Energie,
- mindestens eine Turbomaschine 52 zum Entspannen von Druckluft unter Erzeugung mechanischer Energie,
- zumindest einen zeitweilig mit der Turbomaschine 51 während des Verdichtens von Druckluft mechanisch gekoppelten Antriebsmotor 54 zur Erzeugung der zum Verdichten benötigten mechanischer Energie,
- mindestens einen zeitweilig mit der Turbomaschine 52 während des Entspannens von Druckluft mechanisch gekoppelten Generator 55 zur Umwandlung von beim Entspannen entstehender mechanischer Energie in Elektrizität,
- mindestens einen zumindest zeitweilig mit der Turbomaschine 51 während des Aufladens und mit der Turbomaschine 52 während des Entladens kommunizierenden Druckspeicher 53 zur Zwischenspeicherung verdichteter Druckluft, sowie
- Mittel 56 zur Weiterverwendung der zur Kühlung des Betonmantels 07 abgeführten, von der Kühlvorrichtung 40 aufgenommenen Wärme.

Diese Mittel 56 zur Weiterverwendung der von der Kühlvorrichtung 40 aufgenommenen bzw. zwischen dem gasdicht abgedichteten Wärmespeicherraum 42 und dem Betonmantel 07 abgeführten Wärme können mindestens einen primärseitig mit der Kühlvorrichtung 40 und sekundärseitig mit mindestens einer Turbomaschine 51, 52 wärmetechnisch verbundenen Wärmetauscher 57 umfassen. Die wärmetechnische Verbindung kann durch Wärmeleitung und/oder Wärmeübergang mit oder ohne erzwungene Umwälzung bzw. Konvektion hergestellt sein. Der Wärmetauscher 57 kann dabei eine Wärme abgebende Partie 44 eines Kühlmittelkreislaufs 43 bilden und die Kühlvorrichtung 40 eine Wärme aufnehmende Partie 45 des Kühlmittelkreislaufs 43.

Die von der Kühlvorrichtung 40 abgeführte Wärme kann wie in Fig. 6 durch den mit Qᵥ bezeichneten Pfeil angedeutet zur Vorwärmung beispielsweise der zum Entspannen der Druckluft vorgesehenen Turbomaschine 52 vorgesehen sein, um die Schnellstart- bzw. - anlauffähigkeit des adiabatischen Druckluftspeicherkraftwerks 50 zu verbessern, wodurch Versorgungsengpässe im Stromnetz durch Bereitstellung kurzfristig benötigter Elektrizität kurzfristig und schneller als beim Stand der Technik behoben werden können.

Die Turbomaschine 51 zum Verdichten von Druckluft unter Verbrauch bzw. Erzeugung mechanischer Energie kann bei Durchströmung in entgegengesetzter Richtung mit Druckluft gleichzeitig die Turbomaschine 52 zum Entspannen von Druckluft unter Erzeugung mechanischer Energie bilden. Die eine oder mehreren Turbomaschinen 51, 52 können auch mehrstufig ausgeführt sein, wie in Fig. 6 für die Turbomaschine 51 angedeutet. Der Antriebsmotor 54 und der Generator 55 können durch ein und die selbe elektrische Maschine verwirklicht sein.

Diverse, nicht näher bezeichnete Absperrmittel 58 stellen die zeitweilig benötigten strömungs- und/oder wärmetechnischen Verbindungen zwischen den einzelnen Komponenten des adiabatischen Druckluftspeicherkraftwerks 50 her.

Eine oder mehrere Kupplungen können dazu dienen, zeitweilig erforderliche mechanische Verbindungen zwischen den einzelnen Komponenten des adiabatischen Druckluftspeicherkraftwerks herzustellen und zu trennen, wie beispielsweise zwischen einer sowohl zum Verdichten, als auch zum Entspannen von Druckluft verwendeten Turbomaschine und einem zeitweilig während des Verdichtens benötigten Antriebsmotor 54 sowie einem zeitweilig während des Entspannens benötigten Generator 55.

Das adiabatische Druckluftspeicherkraftwerk 50 erlaubt die Durchführung eines Verfahrens zum Betrieb eines
- mindestens eine Turbomaschine 51, 52 zum Verdichten und/oder Entspannen von Druckluft unter Verbrauch bzw. Erzeugung mechanischer Energie,
- zumindest einen zeitweilig mit mindestens einer Turbomaschine 51 während des Verdichtens von Druckluft mechanisch gekoppelten Antriebsmotor 54 zur Erzeugung mechanischer Energie,
- mindestens einen zeitweilig mit mindestens einer Turbomaschine 52 während des Entspannens von Druckluft mechanisch gekoppelten Generator 55 zur Umwandlung mechanischer Energie in Elektrizität,
- mindestens einen zumindest zeitweilig mit mindestens einer Turbomaschine 51, 52 kommunizierenden Druckspeicher 53 zur Zwischenspeicherung verdichteter Druckluft, sowie
- mindestens einen zumindest zeitweilig mit mindestens einer Turbomaschine 51, 52 und dem Druckspeicher 53 kommunizierenden Wärmespeicher 41 zur Entnahme und Speicherung von während des Verdichtens der Druckluft entstehender Wärme und deren Wiederabgabe während des Entspannens der Druckluft, mit einem von einem einen bevorzugt vorgespannten Betonmantel 07 aufweisenden Druckbehälter 01 umgebenen, Wärmespeichermittel 22 beherbergenden Wärmespeicherraum 42,
umfassenden adiabatischen Druckluftspeicherkraftwerks 50.

Das Verfahren sieht:
- eine gasdichte Abdichtung des Wärmespeicherraums 42 gegenüber dem Betonmantel 07 des den Wärmespeicherraum 42 umgebenden Druckbehälters 01 vorzugsweise durch Anordnung eines sich vorzugsweise gegen die dem Wärmespeicherraum 42 zugewandten Innenseite des Betonmantels 07 abstützenden gasdichten Abdichtungsmittels 30, beispielsweise zumindest eines Inliners 31, zwischen den im Wärmespeicherraum 42 beherbergten Wärmespeichermitteln 22 und dem Betonmantel 07 des diesen umgebenden Druckbehälters 01 des Wärmespeichers 41,
- eine Kühlung des Betonmantels 07 durch Abfuhr von dem Wärmespeicherraum 42 entweichender, ansonsten einen schädlichen Wärmeeintrag in den Betonmantel 07 verursachender Wärme zwischen dem gasdicht abgedichteten Wärmespeicherraum 42 und dem Betonmantel 07 noch vor dem Auftreffen der Wärme auf die dem Wärmespeicherraum 42 zugewandte Innenseite des Betonmantels 07, vorzugsweise durch Anordnung mindestens einer beispielsweise eine Wärme aufnehmende Partie eines Kühlmittelkreislaufs umfassenden Kühlvorrichtung 40 zwischen zumindest einem Teil des gasdichten Abdichtungsmittels 30 und dem Betonmantel 07, sowie
- eine Weiterverwendung der zur Kühlung des Betonmantels abgeführten, beispielsweise von der Kühlvorrichtung 40 aufgenommenen Wärme
vor.

Die Weiterverwendung kann eine oder mehrere der zuvor beschriebenen Maßnahmen umfassen.

Die Erfindung ist insbesondere im Bereich der Herstellung, des Aufbaus und des Betriebs von adiabatischen Druckluftspeicherkraftwerken gewerblich anwendbar.

### Bezugszeichenliste

- 01: Druckbehälter
- 02: Behälterkopf
- 03: Behälterfuß
- 04: hohlzylinderförmige Behälterpartie
- 05: Behälterinnenraum
- 06: Zylinderachse
- 07: Betonmantel
- 08; 08'; 08": Fortsatz
- 09: freies Ende
- 10: Mantelfläche
- 11; 11'; 11": Spannglied
- 12: Druckbogen
- 13: Ummantelung
- 14: Spannglied
- 15: Bewehrung
- 16: erste Zu- und/oder Abführungsleitung
- 17: zweite Zu- und/oder Abführungsleitung
- 18: Erdboden
- 19: Aufnahmesystem
- 20: Umgebung
- 22: Wärmespeichermittel
- 30: gasdichtes Abdichtungsmittel
- 31: Inliner
- 32: hitzebeständige Schicht
- 33: hitzebeständige Schicht
- 34: thermisch isolierende Schicht
- 35: Stahlkappe
- 36: Betonkappe
- 37: wärmedämmendes Material
- 38: Stütze
- 39: Decke
- 40: Kühlvorrichtung
- 41: Wärmespeicher
- 42: Wärmespeicherraum
- 43: Kühlmittelkreislauf
- 44: Wärme abgebende Partie
- 45: Wärme aufnehmende Partie
- 50: adiabatisches Druckluftspeicherkraftwerk
- 51: Turbomaschine
- 52: Turbomaschine
- 53: Druckluftspeicher
- 54: Antriebsmotor
- 55: Generator
- 56: Mittel
- 57: Wärmetauscher
- 58: Absperrmittel

## Patentansprüche

1. Verfahren zum Betrieb eines adiabatischen Druckluftspeicherkraftwerks (50) mit:
- mindestens einer Turbomaschine (51, 52) zum Verdichten und/oder Entspannen von Druckluft,
- mindestens einen zumindest zeitweilig mit mindestens einer Turbomaschine (51, 52) kommunizierenden Druckspeicher (53) zur Zwischenspeicherung verdichteter Druckluft, sowie
- mindestens einen zumindest zeitweilig mit mindestens einer Turbomaschine (51, 52) und mindestens einem Druckspeicher (53) kommunizierenden Wärmespeicher (41) mit einem von einem Betonmantel (07) eines Druckbehälters (01) umgebenen Behälterinnenraum (05), in dem ein gegenüber dem Betonmantel gasdicht abgedichteter, Wärmespeichermittel (22) beherbergender und von einem im Behälterinnenraum untergebrachten, diffusionsdichten Behältnis aus einem biegesteifen oder biegeschlaffen, gasdichten Material umschlossener Wärmespeicherraum (42) untergebracht ist, zur Entnahme und Speicherung von während des Verdichtens der Druckluft entstehender Wärme und deren Wiederabgabe während des Entspannens der Druckluft,
umfassend die Verfahrensschritte:
- Kühlung des Betonmantels (07) durch Abfuhr von dem Wärmespeicherraum (42) entweichender Wärme zwischen dem den gasdicht abgedichteten Wärmespeicherraum (42) begrenzenden Teil des im Behälterinnenraum untergebrachten Behältnisses und dem Betonmantel (07) noch vor dem Auftreffen der ansonsten einen schädlichen Wärmeeintrag in den Betonmantel (07) verursachenden Wärme auf die dem Wärmespeicherraum zugewandte Innenseite des Betonmantels (07), sowie
- Weiterverwendung der zur Kühlung abgeführten Wärme durch:
- eine Zufuhr der abgeführten Wärme in einen Wärmespeicher (41) und/oder
- eine Verwendung der abgeführten Wärme zur Vorwärmung zumindest einer Turbomaschine (51, 52) des Druckluftspeicherkraftwerks (50), und/oder
- eine Elektrizitätserzeugung mittels der abgeführten Wärme.

2. Adiabatisches Druckluftspeicherkraftwerk zur Durchführung eines Verfahrens nach Anspruch 1, umfassend:
- mindestens eine Turbomaschine (51, 52) zum Verdichten und/oder Entspannen von Druckluft,
- mindestens einen zumindest zeitweilig mit mindestens einer Turbomaschine (51, 52) kommunizierenden Druckspeicher (53) zur Zwischenspeicherung verdichteter Druckluft, sowie
- mindestens einen zumindest zeitweilig mit mindestens einer Turbomaschine (51, 52) und mindestens einem Druckspeicher (53) kommunizierenden Wärmespeicher (41) mit einem von einem Betonmantel (07) eines Druckbehälters (01) umgebenen Behälterinnenraum (05), in dem ein Wärmespeichermittel (22) beherbergender Wärmespeicherraum (42) untergebracht ist, zur Entnahme und Speicherung von während des Verdichtens der Druckluft entstehender Wärme und deren Wiederabgabe während des Entspannens der Druckluft,
**dadurch gekennzeichnet, dass**
- der Wärmespeicherraum von einem zwischen den im Wärmespeicherraum (42) beherbergten Wärmespeichermitteln (22) und dem Betonmantel (07) angeordneten, im Behälterinnenraum untergebrachten diffusionsdichten Behältnis aus einem biegesteifen oder biegeschlaffen, gasdichten Material gegenüber dem Betonmantel gasdicht abgedichtet ist, und
- eine zwischen wenigstens einem den gasdicht abgedichteten Wärmespeicherraum (42) begrenzenden Teil des im Behälterinnenraum untergebrachten Behältnisses und dem Betonmantel (07) angeordnete, dem Wärmespeicherraum entweichende Wärme abführende Kühlvorrichtung (40) vorgesehen ist, sowie
- Mittel (56) zur Weiterverwendung der von der Kühlvorrichtung (40) abgeführten Wärme umfassend:
- mindestens einen primärseitig mit der Kühlvorrichtung (40) und sekundärseitig mit mindestens einer Turbomaschine (51, 52) zum Verdichten und/oder Entspannen von dem Druckluftspeicher (53) zuzuführender oder entnommener Druckluft zur Vorheizung mindestens einer Turbomaschine (51, 52) wärmetechnisch verbundenen Wärmetauscher (57), und/oder
- wenigstens eine Wärmepumpe zur Anhebung der abgeführten Wärme auf ein zur Weiterverwendung erforderliches Temperaturniveau, und/oder
- zumindest einen die von der Kühlvorrichtung (40) aufgenommene Wärme speichernden und während des Entspannens der Druckluft wieder an diese abgebenden Wärmespeicher (41), und/oder
- mindestens eine Wärmekraftmaschine (52) zur Elektrizitätserzeugung, und/oder
- mindestens einen thermoelektrischen Wandler zur Elektrizitätserzeugung vorgesehen sind.

3. Adiabatisches Druckluftspeicherkraftwerk nach Anspruch 2,
**dadurch gekennzeichnet,**
**dass** sich das Behältnis gegen die Innenseite des Betonmantels (07) abstützt.

4. Adiabatisches Druckluftspeicherkraftwerk nach Anspruch 3,
**dadurch gekennzeichnet,**
**dass** die Kühlvorrichtung zumindest einen Teil der Abstützung wenigstens eines Teils des Behältnisses gegen die Innenseite des Betonmantels (07) mit besorgt.

5. Adiabatisches Druckluftspeicherkraftwerk nach Anspruch 2, 3 oder 4,
**dadurch gekennzeichnet,**
**dass** das Behältnis eine ein- oder mehrlagige Beschichtung der dem Behälterinnenraum (05) zugewandten Innenwand des Betonmantels (07) umfasst.

6. Adiabatisches Druckluftspeicherkraftwerk nach einem der Ansprüche 2 bis 5,
**dadurch gekennzeichnet,**
**dass** das Behältnis einen Teil mindestens einer hitzebeständigen Schicht (32) und/oder einer thermisch isolierenden Schicht (33, 34) bildet, eine solche umfasst oder von einer solchen umfasst wird.

7. Adiabatisches Druckluftspeicherkraftwerk nach einem der Ansprüche 2 bis 6,
**dadurch gekennzeichnet,**
**dass** das Behältnis in den Behälterinnenraum (05) eingebracht ist.

8. Adiabatisches Druckluftspeicherkraftwerk nach einem der Ansprüche 2 bis 7,
**dadurch gekennzeichnet,**
**dass** das Behältnis einen im Behälterinnenraum (05) untergebrachten Inliner (31) umfasst.

9. Adiabatisches Druckluftspeicherkraftwerk nach einem der Ansprüche 2 bis 8,
**dadurch gekennzeichnet,**
**dass** die Kühlvorrichtung eine zwischen wenigstens einem den gasdicht abgedichteten Wärmespeicherraum (42) begrenzenden Teil des im Behälterinnenraum untergebrachten Behältnisses und dem Betonmantel (07) angeordnete, Wärme aufnehmende Partie eines Kühlmittelkreislaufs umfasst.

10. Adiabatisches Druckluftspeicherkraftwerk nach einem der Ansprüche 2 bis 9,
**gekennzeichnet durch**
einen mit zwischen einer bevorzugt geraden Anzahl von gleichmäßig verteilt um den Umfang des Betonmantels (07) benachbarten Fortsätzen (08), zwischen denen Druckbögen (12) vorgesehen sein können, angeordneten, außen liegenden, linearen Spanngliedern (11) in Umfangsrichtung vorgespannten Betonmantel (07).

## Claims

1. Method for operating an adiabatic compressed air storage power plant (50), with:
- at least one turbomachine (51, 52) for the compression and/or expansion of pressure air,
- at least one pressure accumulator (53), communicating at least temporarily with at least one turbomachine (51, 52), for the intermediate storage of compressed pressure air, and
- at least one heat accumulator (41) communicating at least temporarily with at least one turbomachine (51, 52) and with at least one pressure accumulator (53) and having a vessel inner space (05) which is surrounded by a concrete jacket (07) of a pressure vessel (01) and in which a heat accumulator space (42), which is sealed off, gas-tight, with respect to the concrete jacket and houses heat accumulator means (22) and which is surrounded by a diffusion-tight container accommodated in the vessel inner space and is made from a flexurally stiff or flexurally slack gas-tight material, is accommodated, for the extraction and storage of heat occurring during the compression of the pressure air and for the re-emission of the said heat during the expansion of the pressure air,
comprising the method steps:
- cooling of the concrete jacket (07) by the discharge of heat escaping from the heat accumulator space (42), between the part, delimiting the heat accumulator space (42) sealed off, gas-tight, of the container accommodated in the vessel inner space and the concrete jacket (07), even before the impingement of the heat otherwise causing a harmful introduction of heat into the concrete jacket (07) onto the inside, facing the heat accumulator space, of the concrete jacket (07), and
- further use of the heat discharged for cooling by:
- a feed of the discharged heat into a heat accumulator (41) and/or
- a use of the discharged heat for preheating at least one turbomachine (51, 52) for the compressed air storage power plant (50), and/or
- electricity generation by means of the discharged heat.

2. Adiabatic compressed air storage power plant for carrying out a method according to Claim 1, comprising:
- at least one turbomachine (51, 52) for the compression and/or expansion of pressure air,
- at least one pressure accumulator (53), communicating at least temporarily with at least one turbomachine (51, 52), for the intermediate storage of compressed pressure air, and
- at least one heat accumulator (41) communicating at least temporarily with at least one turbomachine (51, 52) and with at least one pressure accumulator (53) and having a vessel inner space (05) which is surrounded by a concrete jacket (07) of a pressure vessel (01) and in which a heat accumulator space (42) housing heat accumulator means (22) is accommodated, for the extraction and storage of heat occurring during the compression of the pressure air and for the re-emission of the said heat during the expansion of the pressure air,
**characterized in that**
- the heat accumulator space is sealed off, gas-tight, with respect to the concrete jacket by a diffusion-tight container which is arranged between the heat accumulator means (22) housed in the heat accumulator space (42) and the concrete jacket (07) and is accommodated in the vessel inner space and is made from a flexurally stiff or flexurally slack gas-tight material, and
- a cooling device (40) which is arranged between at least one part, delimiting the heat accumulator space (42) sealed off, gas-tight, of the container accommodated in the vessel inner space and the concrete jacket (07) and which discharges heat escaping from the heat accumulator space is provided, and
- means (56) for the further use of the heat discharged by the cooling device (40), comprising:
- at least one heat exchanger (57) thermally connected on the primary side to the cooling device (40) and on the secondary side to at least one turbomachine (51, 52) for the compression and/or expansion of pressure air which is to be fed to or is extracted from the pressure accumulator (53), for the purpose of preheating at least one turbomachine (51, 52), and/or
- at least one heat pump for raising the discharged heat to a temperature level required for further use, and/or
- at least one heat accumulator (41) which stores the heat absorbed by the cooling device (40) and emits again to the said cooling device during the expansion of the pressure air, and/or
- at least one thermal engine (52) for electricity generation, and/or
- at least one thermoelectric converter for electricity generation
are provided.

3. Adiabatic compressed air storage power plant according to Claim 2, **characterized in that** the container is supported against the inside of the concrete jacket (07).

4. Adiabatic compressed air storage power plant according to Claim 3, **characterized in that** the cooling device affords at least part of the support of at least part of the container against the inside of the concrete jacket (07).

5. Adiabatic compressed air storage power plant according to Claim 2, 3 or 4, **characterized in that** the container comprises a single-ply or multiple-ply coating of the inner wall, facing the vessel inner space (05), of the concrete jacket (07).

6. Adiabatic compressed air storage power plant according to one of Claims 2 to 5, **characterized in that** the container forms part of at least one heat-resistant layer (32) and/or of a thermally insulating layer (33, 34), comprises such or is comprised by such.

7. Adiabatic compressed air storage power plant according to one of Claims 2 to 6, **characterized in that** the container is introduced into the vessel inner space (05).

8. Adiabatic compressed air storage power plant according to one of Claims 2 to 7, **characterized in that** the container comprises an inliner (31) accommodated in the vessel inner space (05).

9. Adiabatic compressed air storage power plant according to one of Claims 2 to 8, **characterized in that** the cooling device comprises a heat-absorbing portion of a coolant circuit, the said portion being arranged between at least one part, delimiting the heat accumulator space (42) sealed off, gas-tight, of the container accommodated in the vessel inner space and the concrete jacket (07).

10. Adiabatic compressed air storage power plant according to one of Claims 2 to 9, **characterized by** a concrete jacket (07) prestressed in the circumferential direction by external linear tension members (11) arranged between a preferably even number of extensions (08) which are adjacent in a uniform distribution around the circumference of the concrete jacket (07) and between which pressure arcs (12) may be provided.

## Revendications

1. Procédé de conduite d'une centrale électrique adiabatique (50) à accumulateur d'air comprimé qui présente :
au moins une turbomachine (51, 52) dans laquelle de l'air est comprimé et/ou détendu,
au moins une réserve (53) sous pression qui communique au moins une partie du temps avec au moins une turbomachine (51, 52) pour conserver temporairement de l'air comprimé, et
au moins un accumulateur de chaleur (41) qui communique au moins une partie du temps avec au moins une turbomachine (51, 52) et au moins une réserve (53) sous pression et qui est doté d'un espace intérieur de récipient (05) qui est entouré par une enveloppe (07) en béton d'un récipient (01) sous pression et dans lequel est disposé un espace (42) d'accumulation de chaleur, séparé de l'enveloppe en béton de manière étanche au gaz, reprenant un moyen (22) d'accumulation de chaleur et entouré par un récipient en un matériau étanche au gaz rigide ou déformable en flexion, étanche à la diffusion et disposé dans l'espace intérieur du récipient, pour prélever et accumuler la chaleur dégagée pendant la compression de l'air comprimé et la délivrer pendant la détente de l'air comprimé,
le procédé comportant les étapes qui consistent à :
refroidir l'enveloppe (07) en béton par évacuation de la chaleur qui se dégage de l'espace (42) d'accumulation de chaleur entre l'enveloppe (07) en béton et la partie du récipient disposé dans l'espace intérieur du récipient et délimitant l'espace (42) d'accumulation de chaleur étanche au gaz encore avant que la chaleur arrive sur le côté intérieur de l'enveloppe (07) en béton non tourné vers l'espace d'accumulation de chaleur et provoque sinon un apport dommageable de chaleur dans l'enveloppe (07) en béton,
réutiliser la chaleur évacuée en vue du refroidissement,
en apportant dans un accumulateur de chaleur (41) la chaleur évacuée, et/ou
utiliser la chaleur évacuée pour préchauffer au moins une turbomachine (51, 52) de la centrale (50) à accumulateur d'air comprimé, et/ou
produire de l'électricité au moyen de la chaleur évacuée.

2. Centrale électrique adiabatique à accumulateur d'air comprimé prévue pour en oeuvre du procédé selon la revendication 1, la centrale comprenant :
au moins une turbomachine (51, 52) dans laquelle de l'air est comprimé et/ou détendu,
au moins une réserve (53) sous pression qui communique au moins une partie du temps avec au moins une turbomachine (51, 52) pour conserver temporairement de l'air comprimé, et
au moins un accumulateur de chaleur (41) qui communique au moins une partie du temps avec au moins une turbomachine (51, 52) et au moins une réserve (53) sous pression et qui est doté d'un espace intérieur de récipient (05) qui est entouré par une enveloppe (07) en béton d'un récipient (01) sous pression et dans lequel est disposé un espace (42) d'accumulation de chaleur, séparé de l'enveloppe en béton de manière étanche au gaz, reprenant un moyen (22) d'accumulation de chaleur et entouré par un récipient en un matériau étanche au gaz rigide ou déformable en flexion, étanche à la diffusion et disposé dans l'espace intérieur du récipient, pour prélever et accumuler la chaleur dégagée pendant la compression de l'air comprimé et la délivrer pendant la détente de l'air comprimé, **caractérisée en ce que**
l'espace d'accumulation de chaleur est séparé de l'enveloppe en béton de manière étanche au gaz par un récipient étanche à la diffusion, constitué d'un matériau étanche au gaz, rigide ou déformable en flexion, installé dans l'espace intérieur du récipient entre l'enveloppe (07) en béton et les moyens (22) d'accumulation de chaleur repris dans l'espace (42) d'accumulation de chaleur,
**en ce qu'**un dispositif de refroidissement (40) qui évacue la chaleur dégagée par l'espace d'accumulation de chaleur, disposé entre au moins une partie du récipient placé dans l'espace intérieur du récipient et délimitant l'espace (42) d'accumulation de chaleur étanche au gaz et l'enveloppe (07) en béton est prévu, et
**en ce que** des moyens (56) de réutilisation de la chaleur évacuée par le dispositif de refroidissement (40) comprennent :
au moins un échangeur de chaleur (57) dont le côté primaire est raccordé à échange de chaleur au dispositif de refroidissement (40) et dont le côté secondaire est raccordé à échange de chaleur à au moins une turbomachine (51, 52) qui comprime et/ou détend l'air apporté à la réserve (53) d'air comprimé ou prélevé dans cette dernière pour préchauffer au moins une turbomachine (51, 52),
au moins une pompe à chaleur qui relève le niveau de température de la chaleur évacuée au niveau nécessaire pour sa réutilisation, et/ou
au moins un accumulateur de chaleur (41) qui accumule la chaleur reprise par le dispositif de refroidissement (40) et la renvoie à l'air comprimé pendant sa détente, et/ou
au moins une machine thermique (52) destinée à produire de l''électricité, et/ou
au moins un convertisseur thermoélectrique qui produit de l'électricité.

3. Centrale électrique adiabatique à accumulateur d'air comprimé selon la revendication 2, **caractérisée en ce que** le récipient s'appuie contre le côté intérieur de l'enveloppe (07) en béton.

4. Centrale électrique adiabatique à accumulateur d'air comprimé selon la revendication 3, **caractérisée en ce que** le dispositif de refroidissement assure au moins une partie du soutien d'au moins une partie du récipient contre le côté intérieur de l'enveloppe (07) en béton.

5. Centrale électrique adiabatique à accumulateur d'air comprimé selon les revendications 2, 3 ou 4, **caractérisée en ce que** le récipient comporte un revêtement en une ou plusieurs couches de la paroi intérieure de l'enveloppe (07) en béton tournée vers l'espace intérieur (05) du récipient.

6. Centrale électrique adiabatique à accumulateur d'air comprimé selon l'une des revendications 2 à 5, **caractérisée en ce que** le récipient forme une partie d'au moins une couche réfractaire (32) ou d'une couche thermiquement isolante (33, 34), comprend de telles couches ou est inclus dans ces couches.

7. Centrale électrique adiabatique à accumulateur d'air comprimé selon l'une des revendications 2 à 6, **caractérisée en ce que** le récipient est placé dans l'espace intérieur (05) du récipient.

8. Centrale électrique adiabatique à accumulateur d'air comprimé selon l'une des revendications 2 à 7, **caractérisée en ce que** le récipient comporte une garniture intérieure (31) placée dans l'espace intérieur (05) du récipient.

9. Centrale électrique adiabatique à accumulateur d'air comprimé selon l'une des revendications 2 à 8, **caractérisée en ce que** le dispositif de refroidissement comporte une partie d'un circuit d'agent de refroidissement qui reprend la chaleur et disposée entre au moins une partie du récipient installée dans l'espace intérieur du récipient et délimitant l'espace (42) d'accumulation de chaleur étanche au gaz et l'enveloppe (07) en béton.

10. Centrale électrique adiabatique à accumulateur d'air comprimé selon l'une des revendications 2 à 9, **caractérisée par** une enveloppe en béton (07) précontrainte dans sa direction périphérique par des organes linéaires de serrage (11) disposés à l'extérieur entre un nombre de préférence pair d'appendices (08) répartis au voisinage de la périphérie de l'enveloppe (07) en béton et entre lesquels des arcs de poussée (12) peuvent être prévus.
